(19)

Europäisches
Patentamt
European
Patent Office
Office européen
des brevets

(11) **EP 3 584 295 A1**

(12) **EUROPEAN PATENT APPLICATION**
published in accordance with Art. 153(4) EPC

(43) Date of publication:
**25.12.2019 Bulletin 2019/52**

(21) Application number: **17896493.8**

(22) Date of filing: **27.12.2017**

(51) Int Cl.:
*C09J 7/20* (2018.01)     *C09J 201/00* (2006.01)

(86) International application number:
**PCT/JP2017/046895**

(87) International publication number:
**WO 2018/150745 (23.08.2018 Gazette 2018/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority: **15.02.2017   JP 2017025542**

(71) Applicant: **Nitto Denko Corporation**
**Ibaraki-shi, Osaka 567-8680 (JP)**

(72) Inventors:
• **DOI, Asami**
  **Ibaraki-shi**
  **Osaka 567-8680 (JP)**
• **SHIMOKITA, Keisuke**
  **Ibaraki-shi**
  **Osaka 567-8680 (JP)**

• **CHIBA, Mizuho**
  **Ibaraki-shi**
  **Osaka 567-8680 (JP)**
• **TAKAHASHI, Akiko**
  **Ibaraki-shi**
  **Osaka 567-8680 (JP)**
• **OTAKE, Hironao**
  **Ibaraki-shi**
  **Osaka 567-8680 (JP)**
• **MIZUNO, Mizuho**
  **Ibaraki-shi**
  **Osaka 567-8680 (JP)**

(74) Representative: **Grünecker Patent- und
Rechtsanwälte
PartG mbB
Leopoldstraße 4
80802 München (DE)**

(54)     **PRESSURE-ADHESIVE TYPE ADHESIVE TAPE**

(57)     Provided is a pressure-adhesive type pressure-sensitive adhesive tape suitable for the bonding work of wallpaper or the like, which is excellent in bonding workability of the wallpaper or the like to a wall, and is specifically excellent in function of adjusting the position of the wallpaper or the like at the time of its bonding to the wall, which preferably suppresses the fall of the wallpaper or the like from the wall even after the lapse of a certain time period after the bonding of the wallpaper or the like to the wall, which more preferably enables the wallpaper or the like to be temporarily fixed to the wall with ease at the time of the bonding of the wallpaper or the like to the wall, which still more preferably enables the wallpaper or the like to be cleanly peeled from the wall when the wallpaper or the like bonded to the wall is no longer required, and which is particularly preferably excellent in reworkability after the bonding of the wallpaper or the like to the wall. The pressure-adhesive type pressure-sensitive adhesive tape of the present invention is a pressure-adhesive type pressure-sensitive adhesive tape including a support, a first pressure-sensitive adhesive layer arranged on one side of the support, and a second pressure-sensitive adhesive layer arranged on the other side of the support, wherein, when 180° peeling pressure-sensitive adhesive strengths under 4 specific conditions are represented by A1, A2, B1, and B2, the A1 and the A2 satisfy a relationship of A1<A2, and the BI and the B2 satisfy a relationship of B1<B2.

EP 3 584 295 A1

FIG. 2

**Description**

Technical Field

The present invention relates to a pressure-adhesive type pressure-sensitive adhesive tape. Typically, the present invention relates to a pressure-adhesive type pressure-sensitive adhesive tape suitable for bonding work of wallpaper or the like.

Background Art

When wallpaper is replaced with a new one, another wallpaper is newly bonded onto ground wallpaper. When the new wallpaper thus bonded is no longer required (for example, at the time of reinstatement in a rental house), the ground wallpaper needs to be returned to its original state by cleanly peeling the new wallpaper. To this end, for example, when the bonding work of the new wallpaper is performed with a double-sided pressure-sensitive adhesive tape, the following working method is adopted. First, a masking tape having a low adhesive strength is bonded in, for example, a frame shape to the ground wallpaper. One surface of the double-sided pressure-sensitive adhesive tape having a high adhesive strength is bonded onto the masking tape, and while a release liner on the other surface of the double-sided pressure-sensitive adhesive tape is peeled, the new wallpaper is bonded to the surface.

Wallpaper is required to be bonded to a desired position with high accuracy. However, in the case of such conventional working method as described above, once the new wallpaper is bonded to the double-sided pressure-sensitive adhesive tape having a high adhesive strength, the wallpaper is caused to strongly adhere thereto. Accordingly, when the wallpaper is bonded to an undesired position, there is a problem in that the position of the wallpaper cannot be adjusted, or a problem in that rework in which the wallpaper is peeled and bonded again cannot be performed.

A pressure-sensitive adhesive sheet having imparted thereto a function of adjusting the position of wallpaper or the like at the time of its bonding has been proposed (Patent Literatures 1 and 2). In such pressure-sensitive adhesive sheet, protruding portions are formed on the surface of a pressure-sensitive adhesive layer with a protruding portion-forming material, such as gauze, a non-woven fabric, a woven fabric, a metal mesh, a molding net, or particles of a non-adhesive solid, such as calcium carbonate. At the time of the bonding of the wallpaper or the like, the pressure-sensitive adhesive strength of the sheet is reduced to facilitate the adjustment of the position of the wallpaper or the like, and at the time of the adhesion of the wallpaper or the like after the position adjustment, a pressure is applied to move the protruding portion-forming material into the pressure-sensitive adhesive layer.

However, even such conventional pressure-sensitive adhesive sheet involves the following problems. The function of adjusting the position of the wallpaper or the like at the time of its bonding is not sufficient. It is difficult to lightly temporarily fix the wallpaper or the like at the time of its bonding. Reworkability after the bonding of the wallpaper or the like is low. When a certain time period elapses after the bonding of the wallpaper or the like, the wallpaper or the like is liable to fall. When the bonded wallpaper or the like is no longer required, the wallpaper or the like cannot be cleanly peeled.

Citation List

Patent Literature

   [PTL 1] JP 2657965 B2
   [PTL 2] JP 3660740 B2

Summary of Invention

Technical Problem

An object of the present invention is to provide a pressure-adhesive type pressure-sensitive adhesive tape suitable for the bonding work of wallpaper or the like, which is excellent in bonding workability of the wallpaper or the like to a wall, and is specifically excellent in function of adjusting the position of the wallpaper or the like at the time of its bonding to the wall, which preferably suppresses the fall of the wallpaper or the like from the wall even after the lapse of a certain time period after the bonding of the wallpaper or the like to the wall, which more preferably enables the wallpaper or the like to be temporarily fixed to the wall with ease at the time of the bonding of the wallpaper or the like to the wall, which still more preferably enables the wallpaper or the like to be cleanly peeled from the wall when the wallpaper or the like bonded to the wall is no longer required, and which is particularly preferably excellent in reworkability after the bonding of the wallpaper or the like to the wall.

Solution to Problem

According to one embodiment of the present invention, there is provided a pressure-adhesive type pressure-sensitive adhesive tape, including: a support; a first pressure-sensitive adhesive layer arranged on one side of the support; and a second pressure-sensitive adhesive layer arranged on another side of the support, wherein, when a 180° peeling pressure-sensitive adhesive strength measured by peeling, immediately after a 2-kilogram roller has been reciprocated once to crimp and bond the first pressure-sensitive adhesive layer of the pressure-adhesive type pressure-sensitive adhesive tape having a width of 20 mm to a front surface of polyvinyl chloride wallpaper, the pressure-adhesive type pressure-sensitive adhesive tape from the front surface of the polyvinyl chloride wallpaper with a tensile compression tester at a temperature of 23°C, a humidity of 50%RH, and a tensile rate of 300 mm/min is represented by A1, a 180° peeling pressure-sensitive adhesive strength measured by peeling, immediately after a 0.5-kilogram roller has been reciprocated once to crimp and bond the second pressure-sensitive adhesive layer of the pressure-adhesive type pressure-sensitive adhesive tape having a width of 20 mm to a rear surface of the polyvinyl chloride wallpaper, the pressure-adhesive type pressure-sensitive adhesive tape from the rear surface of the polyvinyl chloride wallpaper with a tensile compression tester at a temperature of 23°C, a humidity of 50%RH, and a tensile rate of 300 mm/min is represented by A2, a 180° peeling pressure-sensitive adhesive strength measured by peeling, after a 2-kilogram roller has been reciprocated once to crimp and bond the first pressure-sensitive adhesive layer of the pressure-adhesive type pressure-sensitive adhesive tape having a width of 20 mm to the front surface of the polyvinyl chloride wallpaper, and the resultant has been stored at a temperature of 60°C for 1 week, the pressure-adhesive type pressure-sensitive adhesive tape from the front surface of the polyvinyl chloride wallpaper with a tensile compression tester at a temperature of 23°C, a humidity of 50%RH, and a tensile rate of 300 mm/min is represented by B1, and a 180° peeling pressure-sensitive adhesive strength measured by peeling, after a 2-kilogram roller has been reciprocated once to crimp and bond the second pressure-sensitive adhesive layer of the pressure-adhesive type pressure-sensitive adhesive tape having a width of 20 mm to the rear surface of the polyvinyl chloride wallpaper, and the resultant has been stored at a temperature of 60°C for 1 week, the pressure-adhesive type pressure-sensitive adhesive tape from the rear surface of the polyvinyl chloride wallpaper with a tensile compression tester at a temperature of 23°C, a humidity of 50%RH, and a tensile rate of 300 mm/min is represented by B2, the A1 and the A2 satisfy a relationship of $A1<A2$, and the B1 and the B2 satisfy a relationship of $B1<B2$.

In one embodiment, the B1 is 1 N/20 mm or more.

In one embodiment, the B2 is 1 N/20 mm or more.

In one embodiment, the A1 is 1 N/20 mm or more.

In one embodiment, the A2 is 1 N/20 mm or more.

In one embodiment, the B1 is 4 N/20 mm or less.

In one embodiment, the A2 is 5 N/20 mm or less.

Advantageous Effects of Invention

According to the present invention, the pressure-adhesive type pressure-sensitive adhesive tape suitable for the bonding work of wallpaper or the like, which is excellent in bonding workability of the wallpaper or the like to a wall, and is specifically excellent in function of adjusting the position of the wallpaper or the like at the time of its bonding to the wall, which preferably suppresses the fall of the wallpaper or the like from the wall even after the lapse of a certain time period after the bonding of the wallpaper or the like to the wall, which more preferably enables the wallpaper or the like to be temporarily fixed to the wall with ease at the time of the bonding of the wallpaper or the like to the wall, which still more preferably enables the wallpaper or the like to be cleanly peeled from the wall when the wallpaper or the like bonded to the wall is no longer required, and which is particularly preferably excellent in reworkability after the bonding of the wallpaper or the like to the wall, can be provided.

Brief Description of Drawings

FIG. **1** is a schematic sectional view of a pressure-adhesive type pressure-sensitive adhesive tape in one embodiment of the present invention.

FIG. **2** is a schematic sectional view of a pressure-adhesive type pressure-sensitive adhesive tape in another embodiment of the present invention.

FIGS. **3** are schematic sectional views for schematically illustrating a manner in which wallpaper is bonded to a wall with the pressure-adhesive type pressure-sensitive adhesive tape in one embodiment of the present invention.

FIG. **4** is one embodiment of a schematic plan view when a second pressure-sensitive adhesive layer is viewed from a vertically upward position opposite to a support.

FIG. **5** is a schematic view for illustrating the structure of an acrylic copolymer particle.

Description of Embodiments

The term "wall" as used herein is a concept encompassing not only a sidewall but also a product generally recognized as one kind of wall, such as a ceiling wall or a floor wall, and typically refers to a sidewall. In addition, examples of a material for the "wall" include not only so-called ground wallpaper but also cement, concrete, mortar, and wood, and the material is typically ground wallpaper.

The term "wallpaper" as used herein refers to a product generally recognized as wallpaper, and its material, design, and the like do not matter. Examples of such "wallpaper" include: a vinyl cloth (obtained by backing polyvinyl chloride with paper or a non-woven fabric) ; a fabric cloth (obtained by backing a fabric, such as a textile fabric or knitted fabric, which is obtained by weaving cellulose regenerated fibers, cotton, hemp, silk, or the like, or a non-woven fabric, with the above-mentioned paper or non-woven fabric); and fleece wallpaper (produced by three-dimensionally entangling pulp and chemical fibers made of polyester or the like with each other) . The wallpaper is typically a vinyl cloth.

The term "wallpaper or the like" as used herein is a concept encompassing, for example, a mosaic tile, a carpet, a padded floor, a tile carpet, a floor tile, a flooring material, a baseboard, and a ceiling material in addition to wallpaper, and typically refers to wallpaper.

The term "(meth) acrylic" as used herein means acrylic and/or methacrylic, the term" (meth) acrylate" as used herein means acrylate and/or methacrylate, and the term "Cx-y alkyl ester" as used herein means an ester of an alkyl group having x to y carbon atoms.

<<Pressure-adhesive Type Pressure-sensitive Adhesive Tape>>

A pressure-adhesive type pressure-sensitive adhesive tape of the present invention is a pressure-adhesive type pressure-sensitive adhesive tape including a support, a first pressure-sensitive adhesive layer arranged on one side of the support, and a second pressure-sensitive adhesive layer arranged on the other side of the support. The tape may include any appropriate other layer between the support and the first pressure-sensitive adhesive layer to the extent that the effects of the present invention are not impaired. The tape may include any appropriate other layer between the support and the second pressure-sensitive adhesive layer to the extent that the effects of the present invention are not impaired.

The pressure-adhesive type pressure-sensitive adhesive tape of the present invention is of a tape shape, and any appropriate size may be adopted as its size (plane area). The term "tape" as used in the present invention is a concept encompassing a product of a so-called sheet shape.

Any appropriate width may be adopted as the width of the pressure-adhesive type pressure-sensitive adhesive tape of the present invention. In consideration of handleability in practical use, the width of the pressure-adhesive type pressure-sensitive adhesive tape of the present invention is preferably from 3 mm to 1,000 mm, more preferably from 5 mm to 500 mm, still more preferably from 10 mm to 300 mm, particularly preferably from 15 mm to 100 mm.

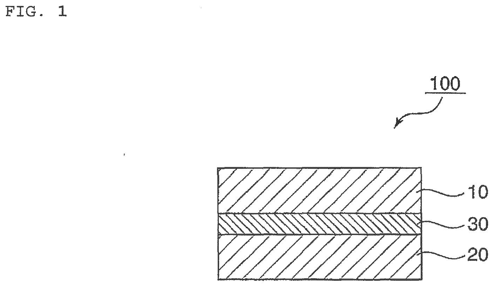

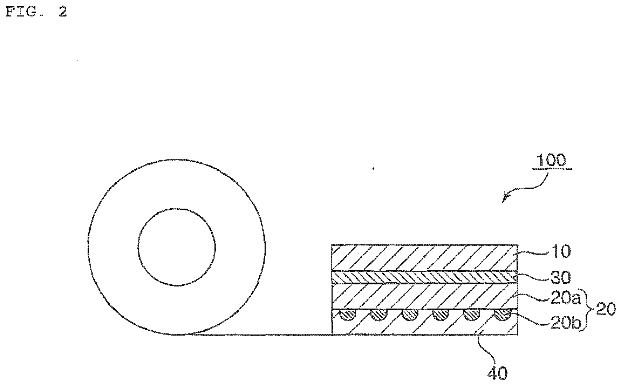

FIG. **1** is a schematic sectional view of a pressure-adhesive type pressure-sensitive adhesive tape in one embodiment of the present invention. In FIG. **1,** a pressure-adhesive type pressure-sensitive adhesive tape **100** includes a support **30,** a first pressure-sensitive adhesive layer **10** arranged on one side of the support **30,** and a second pressure-sensitive adhesive layer **20** arranged on the other side of the support **30.** As illustrated in FIG. **1,** the pressure-adhesive type pressure-sensitive adhesive tape of the present invention is preferably formed of a support, a first pressure-sensitive adhesive layer arranged on one side of the support, and a second pressure-sensitive adhesive layer arranged on the other side of the support. As illustrated in an enlarged section in FIG. **2,** the surface of the second pressure-sensitive adhesive layer has protruding portions.

FIG. **2** is a schematic sectional view of a pressure-adhesive type pressure-sensitive adhesive tape in another embodiment of the present invention. FIG. **2** is an illustration of a roll having wound therearound the pressure-adhesive type pressure-sensitive adhesive tape of the present invention and an enlarged section on the tip side of the roll. In FIG. **2,** the pressure-adhesive type pressure-sensitive adhesive tape **100** includes the support **30,** the first pressure-sensitive adhesive layer **10** arranged on one side of the support **30,** the second pressure-sensitive adhesive layer 20 arranged on the other side of the support **30,** and a release liner **40.** The second pressure-sensitive adhesive layer 20 has a main body layer **20a** and protruding portions **20b.** The release liner is preferably peeled when the bonding work of wallpaper or the like is performed with the pressure-adhesive type pressure-sensitive adhesive tape of the present invention.

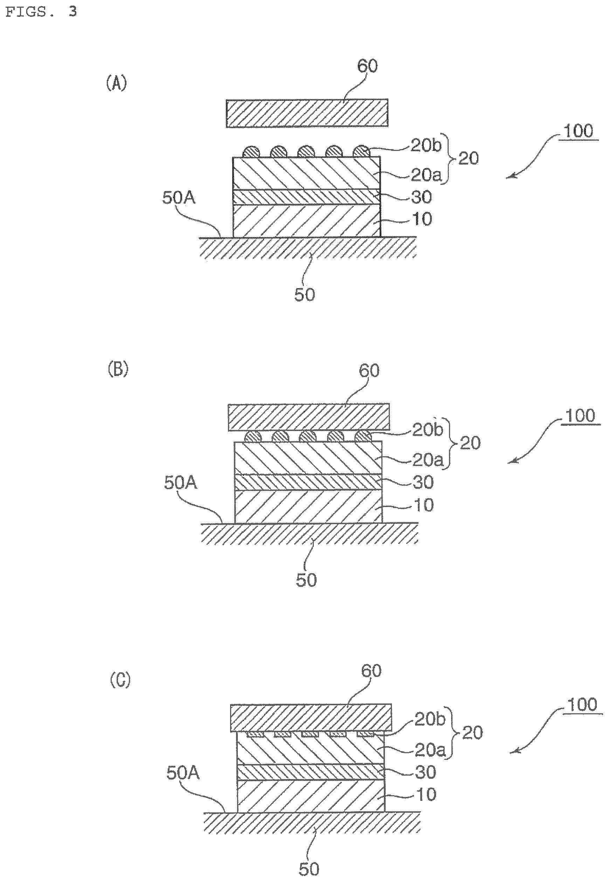

FIGS. **3** are schematic sectional views for schematically illustrating a manner in which wallpaper is bonded to a wall with the pressure-adhesive type pressure-sensitive adhesive tape in one embodiment of the present invention. As illustrated in FIG. **3(A)**, the first pressure-sensitive adhesive layer **10** of the pressure-adhesive type pressure-sensitive adhesive tape **100** is caused to adhere to a surface **50A of** a wall **50**. Next, as illustrated in FIG. **3(B)**, wallpaper **60** is mounted on the second pressure-sensitive adhesive layer **20** of the pressure-adhesive type pressure-sensitive adhesive tape **100** so that the wallpaper **60** maybe brought into abutment with the protruding portions **20b** in the second pressure-sensitive adhesive layer **20,** and the position of the wallpaper **60** is adjusted as required by, for example, sliding the wallpaper **60** on the second pressure-sensitive adhesive layer **20**. After that, as illustrated in FIG. **3(C),** the wallpaper **60** is caused to adhere, and fixed, to the second pressure-sensitive adhesive layer **20** by applying a pressure from the surface of the wallpaper **60.**

In the pressure-adhesive type pressure-sensitive adhesive tape of the present invention, when (1) a 180° peeling pressure-sensitive adhesive strength measured by peeling, immediately after a 2-kilogram roller has been reciprocated once to crimp and bond the first pressure-sensitive adhesive layer of the pressure-adhesive type pressure-sensitive adhesive tape having a width of 20 mm to a front surface of polyvinyl chloride wallpaper, the pressure-adhesive type pressure-sensitive adhesive tape from the front surface of the polyvinyl chloride wallpaper with a tensile compression tester at a temperature of 23°C, a humidity of 50%RH, and a tensile rate of 300 mm/min is represented by A1, (2) a 180° peeling pressure-sensitive adhesive strength measured by peeling, immediately after a 0.5-kilogram roller has been reciprocated once to crimp and bond the second pressure-sensitive adhesive layer of the pressure-adhesive type pressure-sensitive adhesive tape having a width of 20 mm to a rear surface of the polyvinyl chloride wallpaper, the pressure-adhesive type pressure-sensitive adhesive tape from the rear surface of the polyvinyl chloride wallpaper with a tensile compression tester at a temperature of 23°C, a humidity of 50%RH, and a tensile rate of 300 mm/min is represented by A2, (3) a 180° peeling pressure-sensitive adhesive strength measured by peeling, after a 2-kilogram roller has been reciprocated once to crimp and bond the first pressure-sensitive adhesive layer of the pressure-adhesive type pressure-sensitive adhesive tape having a width of 20 mm to the front surface of the polyvinyl chloride wallpaper, and the resultant has been stored at a temperature of 60°C for 1 week, the pressure-adhesive type pressure-sensitive adhesive tape from the front surface of the polyvinyl chloride wallpaper with a tensile compression tester at a temperature of 23°C, a humidity of 50%RH, and a tensile rate of 300 mm/min is represented by B1, and (4) a 180° peeling pressure-sensitive adhesive strength measured by peeling, after a 2-kilogram roller has been reciprocated once to crimp and bond the second pressure-sensitive adhesive layer of the pressure-adhesive type pressure-sensitive adhesive tape having a width of 20 mm to the rear surface of the polyvinyl chloride wallpaper, and the resultant has been stored at a temperature of 60°C for 1 week, the pressure-adhesive type pressure-sensitive adhesive tape from the rear surface of the polyvinyl chloride wallpaper with a tensile compression tester at a temperature of 23°C, a humidity of 50%RH, and a tensile rate of 300 mm/min is represented by B2, the A1 and the A2 satisfy a relationship of A1<A2, and the B1 and the B2 satisfy a relationship of B1<B2.

When the A1 and the A2 satisfy a relationship of A1<A2, and the B1 and the B2 satisfy a relationship of B1<B2, the pressure-adhesive type pressure-sensitive adhesive tape of the present invention is excellent in bonding workability of wallpaper or the like to a wall, and is specifically excellent in function of adjusting the position of the wallpaper or the like at the time of its bonding to the wall.

The A1 is an indicator of an adhesive strength between the first pressure-sensitive adhesive layer of the pressure-adhesive type pressure-sensitive adhesive tape of the present invention and a wall immediately after their bonding, and the A2 is an indicator of an adhesive strength between the second pressure-sensitive adhesive layer of the pressure-adhesive type pressure-sensitive adhesive tape of the present invention and wallpaper or the like immediately after their bonding. When the A1 and the A2 satisfy a relationship of A1<A2, the wallpaper or the like can be temporarily fixed at a desired position immediately after bonding in the bonding work of the wallpaper or the like to the wall. In addition, a surface to be peeled at the time of rework can be suppressed from changing between an "interface between the wall and the first pressure-sensitive adhesive layer", and an "interface between the wallpaper or the like and the second pressure-sensitive adhesive layer." Accordingly, the tape is excellent in bonding workability of the wallpaper or the like to the wall.

The B1 is an indicator of an adhesive strength between the first pressure-sensitive adhesive layer of the pressure-adhesive type pressure-sensitive adhesive tape of the present invention and a wall after the lapse of a certain time period from their bonding, and the B2 is an indicator of an adhesive strength between the second pressure-sensitive adhesive layer of the pressure-adhesive type pressure-sensitive adhesive tape of the present invention and wallpaper or the like after the lapse of a certain time period from their bonding. When the B1 and the B2 satisfy a relationship of B1<B2, after the lapse of a certain time period from bonding in the bonding work of the wallpaper or the like to the wall, in the case where a situation in which the wallpaper is wished to be peeled for the purpose of, for example, its replacement with a new one is established, the occurrence of peeling between the pressure-adhesive type pressure-sensitive adhesive tape of the present invention and the wallpaper (i.e., the occurrence of the adhesive residue of the pressure-adhesive type pressure-sensitive adhesive tape of the present invention on the surface of the wall) can be suppressed. Accordingly, the tape is excellent in bonding workability of the wallpaper or the like to the wall.

The B1 of the pressure-adhesive type pressure-sensitive adhesive tape of the present invention is preferably 1 N/20 mm or more. In the case where the B1 is 1 N/20 mm or more, even when a certain time period elapses after the bonding of wallpaper or the like to a wall, an adhesive strength between the first pressure-sensitive adhesive layer and the wall is appropriately maintained, and hence the wallpaper or the like can hardly fall from the wall. In the case where the B1 is less than 1 N/20 mm, the wallpaper or the like may fall from the wall after the lapse of a certain time period after the bonding of the wallpaper or the like to the wall.

The B2 of the pressure-adhesive type pressure-sensitive adhesive tape of the present invention is preferably 1 N/20 mm or more. In the case where the B2 is 1 N/20 mm or more, even when a certain time period elapses after the bonding of wallpaper or the like to a wall, an adhesive strength between the second pressure-sensitive adhesive layer and the wallpaper or the like is appropriately maintained, and hence the wallpaper or the like can hardly fall from the wall. In the case where the B2 is less than 1 N/20 mm, the wallpaper or the like may fall from the wall after the lapse of a certain time period after the bonding of the wallpaper or the like to the wall.

The A1 of the pressure-adhesive type pressure-sensitive adhesive tape of the present invention is preferably 1 N/20 mm or more. In the case where the A1 is 1 N/20 mm or more, immediately after the bonding of wallpaper or the like to a wall, an adhesive strength between the first pressure-sensitive adhesive layer and the wall is appropriately maintained, and hence the wallpaper or the like can be temporarily fixed to the wall with ease. In the case where the A1 is less than 1 N/20 mm, it may be impossible to temporarily fix the wallpaper or the like to the wall with ease immediately after the bonding of the wallpaper or the like to the wall.

The A2 of the pressure-adhesive type pressure-sensitive adhesive tape of the present invention is preferably 1 N/20 mm or more. In the case where the A2 is 1 N/20 mm or more, immediately after the bonding of wallpaper or the like to a wall, an adhesive strength between the second pressure-sensitive adhesive layer and the wallpaper or the like is appropriately maintained, and hence the wallpaper or the like can be temporarily fixed to the wall with ease. In the case where the A2 is less than 1 N/20 mm, it may be impossible to temporarily fix the wallpaper or the like to the wall with ease immediately after the bonding of the wallpaper or the like to the wall.

The B1 of the pressure-adhesive type pressure-sensitive adhesive tape of the present invention is preferably 4 N/20 mm or less. In the case where the B1 is 4 N/20 mm or less, even when a certain time period elapses after the bonding of wallpaper or the like to a wall, an adhesive strength between the first pressure-sensitive adhesive layer and the wall is equal to or less than an appropriate magnitude. Accordingly, when the wallpaper or the like bonded to the wall is no longer required, the wallpaper or the like can be cleanly peeled from the wall. In the case where the B1 is more than 4 N/20 mm, it may be impossible to cleanly peel the wallpaper or the like from the wall after the lapse of a certain time period after the bonding of the wallpaper or the like to the wall.

The A2 of the pressure-adhesive type pressure-sensitive adhesive tape of the present invention is preferably 5 N/20 mm or less. In the case where the A2 is 5 N/20 mm or less, immediately after the bonding of wallpaper or the like to a wall, an adhesive strength between the second pressure-sensitive adhesive layer and the wallpaper is equal to or less than an appropriate magnitude, and hence the tape can be excellent in reworkability after the bonding of the wallpaper or the like to the wall. In the case where the A2 is more than 5 N/20 mm, it may be impossible to perform rework after the bonding of the wallpaper or the like to the wall.

<<Support>>

A support formed of any appropriate material may be adopted as the support to the extent that the effects of the present invention are not impaired. Examples of such material for the support include a resin film, paper, fabric, a rubber sheet, a foam sheet, a metallic foil, and a composite thereof.

Examples of the resin film include: a film made of polyolefin, such as polyethylene (PE), polypropylene (PP), or an ethylene-propylene copolymer; a film made of polyester, such as polyethylene terephthalate (PET); a vinyl chloride resin film; a vinyl acetate resin film; a polyimide resin film; a polyamide resin film; a fluororesin film; and a cellophane. The term "resin film" as used herein typically refers to a nonporous resin sheet, and is a concept that is distinguished from, for example, a non-woven fabric (i.e., that does not encompass the non-woven fabric). The resin film may be any one of an unstretched film, a uniaxially stretched film, and a biaxially stretched film.

Examples of the paper include Japanese paper, craft paper, glassine paper, high-quality paper, synthetic paper, and top coat paper.

Examples of the fabric include single or blended woven fabrics and non-woven fabrics of various fibrous materials. Examples of the fibrous materials include cotton, staple fiber, manila hemp, pulp, rayon, acetate fiber, polyester fiber, polyvinyl alcohol fiber, polyamide fiber, and polyolefin fiber. The term "non-woven fabric" as used herein is a concept mainly meaning a non-woven fabric for a pressure-sensitive adhesive sheet to be used in the field of a pressure-sensitive adhesive sheet, and typically refers to such a non-woven fabric as to be produced with a general paper machine (the non-woven fabric is sometimes referred to as so-called "paper").

The mass per unit area (basis weight) of the non-woven fabric is preferably 5 $g/m^2$ or more, more preferably 10 g/m² or more from the viewpoint of the bonding workability with which wallpaper is held and bonded, and is preferably 80 g/m² or less, more preferably 50 g/m² or less from the viewpoint of its cutting property.

Examples of the rubber sheet include a natural rubber sheet and a butyl rubber sheet.

Examples of the foam sheet include a polyurethane foam sheet and a polychloroprene rubber foam sheet.

Examples of the metallic foil include an aluminum foil and a copper foil.

The surface of the support on which a pressure-sensitive adhesive layer is arranged may be subjected to surface treatment, such as the application of an undercoating agent, corona discharge treatment, or plasma treatment.

The support is preferably a non-woven fabric or Japanese paper because the effects of the present invention can be expressed to a larger extent.

Any appropriate thickness may be adopted as the thickness of the support to the extent that the effects of the present invention are not impaired. The thickness of the support is preferably from 10 $\mu$m to 1,000 $\mu$m, more preferably from 10 $\mu$m to 100 $\mu$m because the effects of the present invention can be expressed to a larger extent.

<<First Pressure-sensitive Adhesive Layer>>

Any appropriate pressure-sensitive adhesive may be adopted as a pressure-sensitive adhesive forming the first pressure-sensitive adhesive layer to the extent that the effects of the present invention are not impaired. The pressure-sensitive adhesives each forming the first pressure-sensitive adhesive layer may be used alone or in combination thereof. Examples of such pressure-sensitive adhesive include an acrylic pressure-sensitive adhesive, a silicone-based pressure-sensitive adhesive, a rubber-based pressure-sensitive adhesive, a polyamide-based pressure-sensitive adhesive, a polyester-based pressure-sensitive adhesive, an ethylene-vinyl acetate copolymer-based pressure-sensitive adhesive, and a polyurethane-based pressure-sensitive adhesive. Of those, an acrylic pressure-sensitive adhesive, a silicone-based pressure-sensitive adhesive, and a rubber-based pressure-sensitive adhesive are preferred.

The first pressure-sensitive adhesive layer may be formed by, for example, applying a solution or dispersion liquid in which such pressure-sensitive adhesive as described above is dissolved or dispersed in an organic liquid medium or an aqueous liquid medium to one surface of a support in the form of a layer, and heating the resultant to dry and remove the organic liquid medium or the aqueous liquid medium. Any appropriate various methods may each be adopted as a method for the application. Specific examples of such application method include roll coating, kiss-roll coating, gravure coating, reverse coating, roll brushing, spray coating, dip roll coating, bar coating, knife coating, air knife coating, curtain coating, lip coating, and extrusion coating with a die coater or the like. A heating temperature is preferably from 40°C to 200°C, more preferably from 50°C to 180°C, still more preferably from 70°C to 170°C. When the heating temperature is set to fall within the above-mentioned range, a pressure-sensitive adhesive layer having excellent pressure-sensitive adhesive properties can be obtained. Any appropriate period of time may be adopted as a drying time. Such drying time is preferably from 5 seconds to 20 minutes, more preferably from 5 seconds to 10 minutes, still more preferably from 10 seconds to 5 minutes.

The thickness of the first pressure-sensitive adhesive layer is preferably from 5 $\mu$m to 200 $\mu$m, more preferably from 20 $\mu$m to 100 $\mu$m because the effects of the present invention can be expressed to a larger extent.

(Acrylic Pressure-sensitive Adhesive)

The acrylic pressure-sensitive adhesive preferably contains, as a base polymer, an acrylic polymer containing a constituent unit derived from a (meth)acrylic acid alkyl ester as a main monomer unit. The acrylic polymer may adopt any appropriate structure, such as a random copolymer, a block copolymer, or a graft copolymer. The acrylic pressure-sensitive adhesives may be used alone or in combination thereof.

Examples of the (meth)acrylic acid alkyl ester include (meth) acrylic acid alkyl esters each having 1 to 20 carbon atoms, such as methyl (meth)acrylate, ethyl (meth)acrylate, propyl (meth)acrylate, n-butyl (meth)acrylate, isobutyl (meth)acrylate, sec-butyl (meth)acrylate, t-butyl (meth)acrylate, hexyl (meth)acrylate, 2-ethylhexyl (meth)acrylate, cyclohexyl (meth)acrylate, t-butylcyclohexyl (meth)acrylate, isoamyl (meth) acrylate, n-pentyl (meth) acrylate, isopentyl (meth) acrylate, cyclopentyl (meth)acrylate, n-octyl (meth)acrylate, isooctyl (meth)acrylate, cyclooctyl (meth)acrylate, n-nonyl (meth)acrylate, isononyl (meth)acrylate, n-decyl (meth)acrylate, isodecyl (meth)acrylate, n-dodecyl (meth)acrylate, undecyl (meth)acrylate, isoundecyl (meth)acrylate, isomyristyl (meth)acrylate, n-tridecyl (meth)acrylate, n-tetradecyl (meth)acrylate, n-pentadecyl (meth)acrylate, n-octadecyl (meth)acrylate, n-nonadecyl (meth)acrylate, and n-eicosyl (meth)acrylate. Of such (meth) acrylic acid alkyl esters each having 1 to 20 carbon atoms, a (meth)acrylic acid alkyl ester having 1 to 12 carbon atoms is preferred, and a (meth) acrylic acid alkyl ester having 1 to 8 carbon atoms is more preferred. The (meth) acrylic acid alkyl esters may be used alone or in combination thereof.

The content ratio of the constituent unit derived from the (meth)acrylic acid alkyl ester to all monomer units forming the acrylic polymer is preferably from 50 wt% to 99.9 wt%, more preferably from 70 wt% to 99 wt%.

The acrylic polymer may contain a constituent unit derived from another monomer copolymerizable with the (meth)acrylic acid alkyl ester. Examples of such other monomer include: carboxy group-containing monomers, such as acrylic acid, methacrylic acid, carboxyethyl (meth)acrylate, carboxypentyl (meth)acrylate, itaconic acid, maleic acid, fumaric acid, and crotonic acid; hydroxy group-containing monomers, such as 2-hydroxyethyl(meth) acrylate, 2-hydroxypropyl (meth)acrylate, 4-hydroxybutyl (meth)acrylate, 2-hydroxyhexyl (meth)acrylate, 6-hydroxyhexyl (meth)acrylate, 8-hydroxyoctyl(meth)acrylate, 10-hydroxydecyl (meth)acrylate, 12-hydroxylauryl (meth)acrylate, (4-hydroxymethylcyclohexyl)methyl acrylate, N-methylol (meth)acrylamide, N-hydroxy (meth)acrylamide, vinyl alcohol, allyl alcohol, 2-hydroxyethyl vinyl ether, 4-hydroxybutyl vinyl ether, diethylene glycol monovinyl ether, and (4-hydroxymethylcyclohexyl)methyl methacrylate; sulfo group-containing monomers, such as styrenesulfonic acid, allylsulfonic acid, 2-(meth)acrylamido-2-methylpropanesulfonic acid, (meth)acrylamidopropanesulfonic acid, sulfopropyl (meth)acrylate, and (meth)acryloyloxynaphthalenesulfonic acid; phosphate group-containing monomers, such as 2-hydroxyethylacryloyl phosphate; (N-substituted) amide-based monomers, such as (meth)acrylamide, N,N-dimethyl(meth)acrylamide, N-butyl(meth)acrylamide, N-methylol(meth)acrylamide, and N-methylolpropane (meth)acrylamide; aminoalkyl (meth) acrylate-based monomers, such as aminoethyl (meth) acrylate, N,N-dimethylaminoethyl (meth)acrylate, t-butylaminoethyl (meth)acrylate; alkoxyalkyl(meth)acrylate-based monomers; maleimide-based monomers, such as N-cyclohexylmaleimide, N-isopropylmaleimide, N-laurylmaleimide, and N-phenylmaleimide; itaconimide-based monomers, such as N-methylitaconimide, N-ethylitaconimide, N-butylitaconimide, N-octylitaconimide, N-2-ethylhexylitaconimide, N-cyclohexylitaconimide, and N-laurylitaconimide; succinimide-based monomers, such as N-(meth)acryloyloxymethylene succinimide, N-(meth)acryloyl-6-oxyhexamethylene succinimide, and N-(meth)acryloyl-8-oxyoctamethylene succinimide; vinyl-based monomers, such as vinyl acetate, vinyl propionate, N-vinylpyrrolidone, methylvinylpyrrolidone, vinylpyridine, vinylpiperidone, vinylpyrimidine, vinylpiperazine, vinylpyrazine, vinylpyrrole, vinylimidazole, vinyloxazole, vinylmorpholine, N-vinylcarboxylic acid amides, styrene, α-methylstyrene, and N-vinylcaprolactam; cyano acrylate-based monomers, such as acrylonitrile and methacrylonitrile; epoxy group-containing acrylic monomers, such as glycidyl (meth)acrylate; glycol-based acrylate monomers, such as polypropylene glycol (meth)acrylate, methoxyethyl glycol (meth)acrylate, and methoxypolypropylene glycol (meth)acrylate; acrylate-based monomers each having a heterocycle, a halogen atom, a silicon atom, or the like, such as tetrahydrofurfuryl (meth)acrylate, fluorinated (meth)acrylate, and silicone (meth)acrylate; polyfunctional monomers, such as hexanediol di(meth)acrylate, (poly)ethylene glycol di(meth)acrylate, polypropylene glycol di(meth)acrylate, neopentyl glycol di(meth)acrylate, pentaerythritol di(meth)acrylate, trimethylolpropane tri(meth)acrylate, pentaerythritol tri(meth)acrylate, dipentaerythritol hexa(meth)acrylate, epoxy acrylate, polyester acrylate, urethane acrylate, divinylbenzene, butyl di(meth)acrylate, and hexyl di(meth)acrylate; olefin-based monomers, such as isoprene, dibutadiene, and isobutylene; and vinyl ether-based monomers, such as vinyl ether. Of those, a carboxy group-containing monomer or a hydroxy group-containing monomer is preferred as the other monomer. The other monomers may be used alone or in combination thereof.

The acrylic polymer may be produced by any appropriate method to the extent that the effects of the present invention are not impaired. A preferred example of such method is a production method involving polymerizing the monomer(s) serving as raw material according to any appropriate polymerization mode. Examples of such polymerization mode include various kinds of radical polymerization, such as solution polymerization, bulk polymerization, and emulsion polymerization. Any appropriate additive components may be adopted as additive components, such as a polymerization initiator, a chain transfer agent, and an emulsifier, which may be generally used in such polymerization mode, to the extent that the effects of the present invention are not impaired. In addition, any appropriate usage amount may be adopted as the usage amount of any such additive component to the extent that the effects of the present invention are not impaired.

The weight-average molecular weight of the acrylic copolymer may be controlled on the basis of the usage amounts of the polymerization initiator, the chain transfer agent, and the like, reaction conditions, and the like.

Examples of the polymerization initiator include: azo-based initiators, such as 2,2'-azobisisobutyronitrile, 2,2'-azobis(2-amidinopropane)dihydrochloride, 2,2'-azobis[2-(5-methyl-2-imidazolin-2-yl)propane] dihydrochloride, 2,2'-azobis(2-methylpropionamidine) disulfate, 2,2'-azobis(N,N'-dimethyleneisobutylamidine), and 2,2'-azobis[N-(2-carboxyethyl)-2-methylpropionamidine]hydrate (VA-057 manufactured by Wako Pure Chemical Industries Ltd.); persulfates, such as potassium persulfate and ammonium persulfate; peroxide-based initiators, such as di(2-ethylhexyl) peroxydicarbonate, di(4-t-butylcyclohexyl) peroxydicarbonate, di-sec-butyl peroxydicarbonate, t-butyl peroxyneodecanoate, t-hexylperoxypivalate, t-butylperoxypivalate, dilauroyl peroxide, di-n-octanoyl peroxide, 1,1,3,3-tetramethylbutyl peroxy-2-ethylhexanoate, di(4-methylbenzoyl) peroxide, dibenzoyl peroxide, t-butyl peroxyisobutyrate, 1,1-di(t-hexylperoxy)cyclohexane, t-butyl hydroperoxide, and hydrogen peroxide; a combination of a persulfate and sodium hydrogen sulfite; and redox-based initiators each obtained by combining a peroxide and a reducing agent, such as a combination of a peroxide and sodium ascorbate.

The polymerization initiators may be used alone or in combination thereof.

The usage amount of the polymerization initiator is preferably from 0.005 part by weight to 1 part by weight, more preferably from 0.02 part by weight to 0.5 part by weight with respect to 100 parts by weight of all monomers.

Examples of the chain transfer agent include lauryl mercaptan, glycidyl mercaptan, mercaptoacetic acid, 2-mercaptoethanol, thioglycolic acid, 2-ethylhexyl thioglycolate, and 2,3-dimercapto-1-propanol.

The chain transfer agents may be used alone or in combination thereof.

The usage amount of the chain transfer agent is preferably 0.1 part by weight or less with respect to 100 parts by weight of all monomers.

Examples of the emulsifier to be used in the emulsion polymerization include: anionic emulsifiers, such as sodium lauryl sulfate, ammonium lauryl sulfate, sodium dodecylbenzene sulfonate, an ammonium polyoxyethylene alkyl ether sulfate, a sodium polyoxyethylene alkyl ether sulfate, and a sodium polyoxyethylene alkyl phenyl ether sulfate; and nonionic emulsifiers, such as a polyoxyethylene alkyl ether, a polyoxyethylene alkyl phenyl ether, a polyoxyethylene fatty acid ester, and a polyoxyethylene-polyoxypropylene block polymer.

The emulsifiers may be used alone or in combination thereof.

The usage amount of the emulsifier is preferably from 0.3 part by weight to 5 parts by weight, more preferably from 0.5 part by weight to 1 part by weight with respect to 100 parts by weight of all monomers.

The acrylic pressure-sensitive adhesive may contain a cross-linking agent in addition to the base polymer. Examples of such cross-linking agent include a polyvalent isocyanurate compound, a polyfunctional isocyanate compound, a polyfunctional melamine compound, a polyfunctional epoxy compound, a polyfunctional oxazoline compound, a polyfunctional aziridine compound, and a metal chelate compound. Any appropriate compound may be adopted as a more specific compound serving as such cross-linking agent to the extent that the effects of the present invention are not impaired. Any appropriate usage amount may be adopted as the usage amount of such cross-linking agent to the extent that the effects of the present invention are not impaired. Such cross-linking agents may be used alone or in combination thereof.

An example of the polyvalent isocyanurate compound is a polyisocyanurate compound of hexamethylene diisocyanate. A commercial product may be used as the polyvalent isocyanurate compound, and specific examples thereof include a product available under the product name "DURANATE TPA-100" (manufactured by Asahi Kasei Chemicals Corporation), and products available under the product names "CORONATE HK", "CORONATE HX", and "CORONATE 2096" (manufactured by Nippon Polyurethane Industry Co., Ltd.).

The polyfunctional isocyanate compound is a compound having at least two or more isocyanate groups (preferably three or more isocyanate groups) in the molecule, and specific examples thereof include aliphatic polyisocyanates, alicyclic polyisocyanates, and aromatic polyisocyanates.

Examples of the aliphatic polyisocyanates include: 1,2-ethylene diisocyanate; tetramethylene diisocyanates, such as 1,2-tetramethylenediisocyanate, 1,3-tetramethylenediisocyanate, and 1,4-tetramethylene diisocyanate; hexamethylene diisocyanates, such as 1,2-hexamethylene diisocyanate, 1,3-hexamethylene diisocyanate, 1,4-hexamethylene diisocyanate, 1,5-hexamethylene diisocyanate, 1,6-hexamethylene diisocyanate, and 2,5-hexamethylene diisocyanate; 2-methyl-1,5-pentane diisocyanate; 3-methyl-1,5-pentane diisocyanate; and lysine diisocyanate.

Examples of the alicyclic polyisocyanates include : isophorone diisocyanate; cyclohexyl diisocyanates, such as 1,2-cyclohexyl diisocyanate, 1,3-cyclohexyl diisocyanate, and 1,4-cyclohexyl diisocyanate; cyclopentyl diisocyanates, such as 1,2-cyclopentyl diisocyanate and 1,3-cyclopentyl diisocyanate; hydrogenated xylylene diisocyanate; hydrogenated tolylene diisocyanate; hydrogenated diphenylmethane diisocyanate; hydrogenated tetramethylxylene diisocyanate; and 4,4'-dicyclohexylmethane diisocyanate.

Examples of the aromatic polyisocyanates include 2,4-tolylene diisocyanate, 2,6-tolylene diisocyanate, 4,4'-diphenylmethane diisocyanate, 2,4'-diphenylmethane diisocyanate, 2,2'-diphenylmethane diisocyanate, 4,4'-diphenyl ether diisocyanate, 2-nitrodiphenyl-4,4'-diisocyanate, 2,2'-diphenylpropane-4,4'-diisocyanate, 3,3'-dimethyldiphenylmethane-4,4'-diisocyanate, 4,4'-diphenylpropane diisocyanate, m-phenylene diisocyanate, p-phenylene diisocyanate, naphthylene-1,4-diisocyanate, naphthylene-1,5-diisocyanate, 3,3'-dimethoxydiphenyl-4,4'-diisocyanate, xylylene-1,4-diisocyanate, and xylylene-1,3-diisocyanate.

As the polyfunctional isocyanate compound, dimers or trimers produced from aromatic/aliphatic polyisocyanates may be used in addition to the aliphatic polyisocyanates, the alicyclic polyisocyanates, and the aromatic polyisocyanates. Specific examples thereof include: a dimer or trimer of diphenylmethane diisocyanate; a reaction product of trimethylolpropane and tolylene diisocyanate; a reaction product of trimethylolpropane and hexamethylene diisocyanate; and polymers such as polymethylene polyphenyl isocyanate, polyether polyisocyanate, and polyester polyisocyanate.

A commercial product may be used as the polyfunctional isocyanate compound, and specific examples thereof include a product available under the product name "CORONATE L" (manufactured by Nippon Polyurethane Industry Co., Ltd.) serving as a trimer adduct of trimethylolpropane and tolylene diisocyanate, and a product available under the product name "CORONATE HL" (manufactured by Nippon Polyurethane Industry Co., Ltd.) serving as a trimer adduct of trimethylolpropane and hexamethylene diisocyanate.

Examples of the polyfunctional melamine compound include methylated methylol melamine and butylated hexamethylol melamine.

Examples of the polyfunctional epoxy compound include diglycidyl aniline and glycerin diglycidyl ether.

The kind and usage amount of the cross-linking agent are preferably selected so that the gel fraction of the formed pressure-sensitive adhesive layer may be preferably from 30 wt% to 98 wt%, more preferably from 35 wt% to 95 wt%. When the gel fraction of the formed pressure-sensitive adhesive layer is less than 30 wt%, there is a risk in that a sufficient retaining strength (cohesiveness) may not be obtained. When the gel fraction of the formed pressure-sensitive adhesive layer is more than 98 wt%, there is a risk in that a cross-link density may be increased to make it difficult to obtain a high adhesive strength (pressure-sensitive adhesive strength).

The usage amount of the cross-linking agent is, for example, preferably from 0.01 part by weight to 10 parts by weight, more preferably from 0.02 part by weight to 5 parts by weight with respect to 100 parts by weight of the acrylic polymer. When the usage amount of the cross-linking agent is less than 0.01 part by weight with respect to 100 parts by weight of the acrylic polymer, there is a risk in that the retaining strength (cohesive strength) of the pressure-sensitive adhesive layer cannot be enhanced, resulting in a reduction in heat resistance or the like. When the usage amount of the cross-linking agent is more than 10 parts by weight with respect to 100 parts by weight of the acrylic polymer, there is a risk in that the cross-linking reaction may proceed to such a degree as to cause a reduction in adhesive strength.

The acrylic pressure-sensitive adhesive may contain a tackifier. Examples of such tackifier include a terpene-based tackifier, a terpenephenol-basedtackifier, a rosin-basedtackifier, and a styrene-based tackifier (e.g., a styrene resin and poly($\alpha$-methylstyrene)). Of those, a rosin-based tackifier is preferred. Any appropriate usage amount may be adopted as the usage amount of such tackifier to the extent that the effects of the present invention are not impaired. Such usage amount of the tackifier is preferably from 5 parts by weight to 50 parts by weight, more preferably from 10 parts by weight to 30 parts by weight with respect to 100 parts by weight of the base polymer. Such tackifiers may be used alone or in combination thereof.

Examples of the rosin-based tackifier include : modified rosins each obtained by modifying an unmodified rosin (raw rosin), such as a gum rosin, a wood rosin, or a tall oil rosin, through disproportionation or polymerization (e.g., a disproportionated rosin, a polymerized rosin, and other chemically modified rosins) ; and various rosin derivatives.

Examples of the rosin derivatives include: rosin esters, such as a rosin ester obtained by esterifying an unmodified rosin with an alcohol, and a modified rosin ester obtained by esterifying a modified rosin (e.g., a hydrogenated rosin, a disproportionated rosin, or a polymerized rosin) with an alcohol; unsaturated fatty acid-modified rosins each obtained by modifying an unmodified rosin or a modified rosin (e.g. , a hydrogenated rosin, a disproportionated rosin, or a polymerized rosin) with an unsaturated fatty acid; unsaturated fatty acid-modified rosin esters each obtained by modifying a rosin ester with an unsaturated fatty acid; rosin alcohols each obtained by subjecting a carboxy group of an unmodified rosin or a modified rosin (e.g., a hydrogenated rosin, a disproportionated rosin, or a polymerized rosin), an unsaturated fatty acid-modified rosin, or an unsaturated fatty acid-modif ied rosin ester to reduction treatment; and metal salts of rosins (in particular, a rosin ester), such as an unmodified rosin, a modified rosin, and various rosin derivatives. Examples of the rosin derivatives also include rosin phenol resins each obtained by adding phenol to a rosin (e.g., an unmodified rosin, a modified rosin, or various rosin derivatives) with an acid catalyst, followed by heat polymerization.

Examples of the alcohol to be used for obtaining the rosin ester include: dihydric alcohols, such as ethylene glycol, diethylene glycol, propylene glycol, and neopentyl glycol; trihydric alcohols, such as glycerin, trimethylolethane, and trimethylolpropane; tetrahydric alcohols, such as pentaerythritol and diglycerin; and hexahydric alcohols, such as dipentaerythritol.

The rosin-based tackifier is preferably a modified rosin ester, more preferably a polymerized rosin ester (polymerized rosin esterified with an alcohol).

A commercial product may be used as the tackifier. Examples of the polymerized rosin ester include SUPER ESTER E-650 (manufactured by Arakawa Chemical Industries Ltd.), SUPER ESTER E-788 (manufactured by Arakawa Chemical Industries Ltd.), SUPER ESTER E-786-60 (manufactured by Arakawa Chemical Industries Ltd.), SUPER ESTER E-865 (manufactured by Arakawa Chemical Industries Ltd.), SUPER ESTER E-865NT (manufactured by Arakawa Chemical Industries Ltd.), HARIESTER SK-508 (manufactured by Harima Chemicals, Inc.), HARIESTER SK-508H (manufactured by Harima Chemicals, Inc.), HARIESTER SK-816E (manufactured by Harima Chemicals, Inc.), HARIESTER SK-822E (manufactured by Harima Chemicals, Inc.), and HARIESTER SK-323NS (manufactured by Harima Chemicals, Inc.).

The tackifier has a softening temperature of preferably 80°C or more, more preferably 90°C or more, still more preferably 100°C or more, particularly preferably 110°C or more, most preferably 120°C or more. In addition, from the viewpoint of preventing a reduction in initial adhesive strength, the tackifier has a softening temperature of preferably 160°C or less, more preferably 150°C or less. The term "softening temperature" as used herein refers to a ring-and-ball softening temperature Ts measured in conformity with a JIS-K-2207 ring-and-ball softening point (temperature) testing method through the use of a constant load capillary extrusion rheometer (Shimadzu flow tester CFT-500D), and refers to a value measured under the conditions of a die measuring 1 mm×1 mm, a load of 4.9 N, and a rate of temperature increase of 5°C/min.

In one embodiment, the acrylic pressure-sensitive adhesive is a so-called "water-dispersed acrylic pressure-sensitive adhesive, " which is a dispersion liquid in which an acrylic polymer produced by emulsion polymerization is dispersed as a dispersoid in an aqueous medium after the emulsion polymerization. Such water-dispersed acrylic pressure-sensitive adhesive may contain an emulsion-type tackifier (i.e., a dispersion liquid in which a tackifier (resin component) is dispersed as a dispersoid in an aqueous medium). The emulsion-type tackifier is preferably an emulsion-type rosin-based tackifier.

The acrylic pressure-sensitive adhesive may contain any appropriate other component to the extent that the effects of the present invention are not impaired. Examples of such other component include a stabilizer, a filler, a colorant, a UV absorber, and an antioxidant. Such other components may be used alone or in combination thereof.

(Silicone-based Pressure-sensitive Adhesive)

Any appropriate silicone-based pressure-sensitive adhesive may be adopted as the silicone-based pressure-sensitive adhesive to the extent that the effects of the present invention are not impaired. Examples of such silicone-based pressure-sensitive adhesive include an addition-type silicone-based pressure-sensitive adhesive, a peroxide-curable silicone-based pressure-sensitive adhesive, and a condensation-type silicone-based pressure-sensitive adhesive. Examples of the silicone-based pressure-sensitive adhesive include a one-component silicone-based pressure-sensitive adhesive and a two-component silicone-based pressure-sensitive adhesive. The silicone-based pressure-sensitive adhesives may be used alone or in combination thereof.

An example of the silicone-based pressure-sensitive adhesive is a silicone-based pressure-sensitive adhesive formed of a composition containing 100 parts by weight of a peroxide-curable silicone resin, 1.2 parts by weight to 3.2 parts by weight of an organic peroxide curing agent, and 2 parts by weight to 9 parts by weight of an addition reaction-curable silicone rubber. This composition can particularly exhibit excellent load durability even under a high-temperature environment, for example, under an environment of more than 200°C.

The peroxide-curable silicone resins may be used alone or in combination thereof.

The peroxide-curable silicone resin contains a peroxide-curable silicone rubber and/or a partial condensate thereof . The silicone rubber may be a crude rubber (gum). The peroxide-curable silicone resin may contain at least one kind selected from a silicone resin and a partial condensate thereof . Any appropriate composition may be adopted as the composition of the peroxide-curable silicone resin as long as the composition contains the peroxide-curable silicone rubber and/or the partial condensate thereof.

An example of the peroxide-curable silicone rubber is an organopolysiloxane having dimethylsiloxane as a main constituent unit. The organopolysiloxane may have introduced therein a hydroxy group or any other functional group as required. A specific example of the organopolysiloxane is dimethylpolysiloxane. The weight-average molecular weight of the organopolysiloxane is preferably 180, 000 or more, more preferably from 280, 000 to 1, 000, 000, still more preferably from 500,000 to 900,000. The peroxide-curable silicone resin may contain two or more kinds of peroxide-curable silicone rubbers. The peroxide-curable silicone resin may contain two or more kinds of partial condensates of peroxide-curable silicone rubbers.

An example of the silicone resin is an organopolysiloxane having at least one kind of unit selected from an M unit ($R_3SiO_{1/2}$), a Q unit ($SiO_2$), a T unit ($RSiO_{3/2}$), and a D unit ($R_2SiO$). Rs in those units each independently represent a monovalent hydrocarbon group or a hydroxy group. The silicone resin may have introduced therein a functional group as required, and the introduced functional group may be one that causes a cross-linking reaction. The silicone resin is preferably a so-called MQ resin, which is formed of the M unit and the Q unit.

When the silicone resin is the MQ resin, a molar ratio between the content of the M unit and the content of the Q unit is, for example, preferably from 0.3:1 to 1.5:1, more preferably from 0.5:1 to 1.3:1, expressed as M unit:Q unit.

The peroxide-curable silicone resin may contain two or more kinds of silicone resins. The peroxide-curable silicone resin may contain two or more kinds of partial condensates of silicone resins.

When the peroxide-curable silicone resin contains the silicone resin, a weight ratio between the silicone rubber and the silicone resin is, for example, preferably from 100:110 to 100:220, more preferably from 100:160 to 100:190, expressed as silicone rubber:silicone resin. When the peroxide-curable silicone resin contains the partial condensate of the silicone rubber and/or the partial condensate of the silicone resin, it is appropriate that the weight ratio between the silicone rubber and the silicone resin be determined from the weights of the silicone rubber and silicone resin before partial condensation.

Examples of the organic peroxide curing agent include benzoyl peroxide, t-butyl peroxybenzoate, dicumyl peroxide, t-butyl cumyl peroxide, di-t-butyl peroxide, 2,5-dimethyl-2,5-di(t-butylperoxy)hexane, 2,4-dichlorobenzoyl peroxide, 1,1-bis(t-butylperoxy)-3,3,5-trimethylcyclohexane, and 2,5-dimethyl-2,5-di(t-butylperoxy)hexyne-3.

The organic peroxide curing agents may be used alone or in combination thereof.

The amount of the organic peroxide curing agent that may be contained in the silicone-based pressure-sensitive adhesive is preferably from 1.2 parts by weight to 3.2 parts by weight, more preferably from 1.4 parts by weight to 3.0 parts by weight with respect to 100 parts by weight of the peroxide-curable silicone resin. When the amount of the organic peroxide curing agent that may be contained in the silicone-based pressure-sensitive adhesive is less than 1.2 parts by weight with respect to 100 parts by weight of the peroxide-curable silicone resin, there is a risk in that the adhesive strength of the silicone-based pressure-sensitive adhesive maybe insufficient. When the amount of the organic peroxide curing agent that may be contained in the silicone-based pressure-sensitive adhesive is more than 3.2 parts by weight with respect to 100 parts by weight of the peroxide-curable silicone resin, there is a risk in that the load durability under a high-temperature environment may be reduced.

The number of kinds of addition reaction-curable silicone rubbers that may be contained in the silicone-based pressure-sensitive adhesive may be only one, or may be two or more.

The addition reaction-curable silicone rubber may be a crude rubber (gum). Any appropriate addition reaction-curable silicone rubber may be adopted as the addition reaction-curable silicone rubber. The addition reaction-curable silicone rubber contains an addition-polymerizable group. Such addition-polymerizable group is, for example, a vinyl group.

The amount of the addition reaction-curable silicone rubber is preferably from 2 parts by weight to 9 parts by weight, more preferably from 3 parts by weight to 7 parts by weight with respect to 100 parts by weight of the peroxide-curable silicone resin. When the amount of the addition reaction-curable silicone rubber falls within this range, a silicone pressure-sensitive adhesive that exhibits excellent load durability even under a high-temperature environment can be provided.

When the addition reaction-curable silicone rubber is cured, the modulus of elasticity (storage modulus of elasticity G') of the resultant is preferably 0.01 MPa or more and 1 MPa or less at room temperature (25°C), and 0.01 MPa or more and 1 MPa or less at 200°C. Such modulus of elasticity is more preferably 0.1 MPa or more and 1 MPa or less at room temperature, and 0.1 MPa or more and 1 MPa or less at 200°C. The storage modulus of elasticity G' may be measured with a rheometer. As a specific example of a measurement method, a measurement object is, for example, formed or laminated so as to have a thickness of about 1.5 mm, and is then subjected to measurement in the temperature range of from -20°C to 250°C using a rheometer (e.g., Advanced Rheometric Expansion System (ARES) manufactured by Rheometric Scientific) under the measurement conditions of a shear mode, a frequency of 1 Hz, and a rate of temperature increase of 5°C/min.

As required, the silicone-based pressure-sensitive adhesive may contain other components, such as an additive, a catalyst, a cross-linking agent, and a solvent for adjusting the viscosity of the pressure-sensitive adhesive. An example of the catalyst is a platinum catalyst. An example of the cross-linking agent is a siloxane-based cross-linking agent having a SiH group.

The gel fraction of the silicone-based pressure-sensitive adhesive after its curing (gel fraction in its cured product) is preferably from 40 wt% to 60 wt%, more preferably from 45 wt% to 55 wt%. The gel fraction of the silicone-based pressure-sensitive adhesive after its curing may be determined, for example, by immersion involving dissolving components other than a gel in the silicone-based pressure-sensitive adhesive as described below.

About 0.1 g of the silicone-based pressure-sensitive adhesive after its curing, for example, the formed pressure-sensitive adhesive layer is wrapped in a porous polytetrafluoroethylene (PTFE) sheet having an average pore diameter of 0.2 $\mu$m (e.g., NTF1122, manufactured by Nitto Denko Corporation), and then the resultant is tied with a kite string to produce a measurement sample. Next, the weight of the produced measurement sample is measured, and this weight is defined as a pre-immersion weight C. The pre-immersion weight C is the total weight of the pressure-sensitive adhesive layer, the polytetrafluoroethylene sheet, and the kite string. Separately, the total weight of the PTFE sheet and the kite string is measured in advance, and is defined as a wrapper weight B. Next, the measurement sample is placed in a container having an internal volume of 50 mL filled with toluene, and the whole is left to stand still at 23°C for 7 days. Next, the inside of the container including the measurement sample is washed with ethyl acetate, and then the measurement sample is removed from the container and transferred to a cup made of aluminum, followed by drying at 130°C for 2 hours to remove ethyl acetate. Next, the weight of the measurement sample from which ethyl acetate has been removed is measured, and this weight is defined as a post-immersion weight A. The gel fraction may be determined from the following equation.

$$\text{Gel fraction (wt\%)} = (A-B)/(C-B) \times 100$$

The silicone-based pressure-sensitive adhesive may be produced by, for example, mixing the peroxide-curable silicone resin, the organic peroxide curing agent, and the addition reaction-curable silicone rubber. Any appropriate order may be adopted as the order in which the components are mixed. In the mixing, any appropriate other component may be added as required.

(Rubber-based Pressure-sensitive Adhesive)

The rubber-based pressure-sensitive adhesive contains a rubber-based polymer as a base polymer, and encompasses one in which the base polymer is a natural rubber (NR), one in which the base polymer is a modified natural rubber, and one in which the base polymer is a synthetic rubber.

As the modified natural rubber, there maybe preferably adopted a modified natural rubber containing 50 wt% or more (preferably 60 wt% or more) of a structural portion derived from a natural rubber. An example of the modified natural rubber is a graft-modified natural rubber obtained by grafting another monomer onto the natural rubber. Examples of the monomer to be grafted onto the natural rubber include an acrylic monomer and styrene. The graft-modified natural rubber is preferably an acrylic-modified natural rubber in which the monomer to be grafted has 50 wt% or more of an acrylic monomer (preferably a monomer having an acryloyl group or a methacryloyl group). In the acrylic-modified natural rubber, examples of the acrylic monomer to be grafted onto the natural rubber include: (meth) acrylic acid; and alkyl (meth)acrylates each including an alkyl group having 1 to 16 carbon atoms, such as methyl (meth)acrylate, ethyl (meth)acrylate, isopropyl (meth)acrylate, and t-butyl (meth)acrylate. Of those, methylmethacrylate, ethylmethacrylate, isopropyl methacrylate, and t-butyl methacrylate are preferred. The acrylic monomers may be used alone or in combination thereof.

Examples of the synthetic rubber include polybutadiene, polyisoprene, a butyl rubber, polyisobutylene, a styrene-butadiene rubber (SBR), a styrene-butadiene-styrene block copolymer (SBS), a styrene-ethylene-butylene-styrene block copolymer (SEBS), and a styrene-isoprene-styrene block copolymer (SIS).

In one embodiment, the rubber-based pressure-sensitive adhesive is a rubber-based pressure-sensitive adhesive in which the base polymer is a natural rubber. Such natural rubber is preferably, for example, a natural rubber having a Mooney viscosity of from 10 to 60 under the measurement conditions of MS(1+4)100°C (using an L-type rotor, preheating: 1 minute, viscosity measurement time: 4 minutes, test temperature: 100°C).

In another embodiment, the rubber-based pressure-sensitive adhesive is a rubber-based pressure-sensitive adhesive in which the base polymer is an acrylic-modified natural rubber (NR-MMA graft copolymer) obtained by grafting methyl methacrylate onto a natural rubber. Such acrylic-modified natural rubber (NR-MMA graft copolymer) may be produced by any appropriate method, or may be easily obtained as a commercial product. The graft ratio of methyl methacrylate in the acrylic-modified natural rubber (NR-MMA graft copolymer) is preferably from 1% to 120%, more preferably from 5% to 100%, still more preferably from 10% to 90%, particularly preferably from 30% to 80%. The graft ratio of methyl methacrylate in the acrylic-modified natural rubber (NR-MMA graft copolymer) is expressed by (weight of methyl methacrylate bonded to natural rubber/weight of natural rubber used in grafting) $\times 100$ (%), and is generally equivalent to a value calculated from a weight ratio between the natural rubber and methyl methacrylate used at the time of the production of the acrylic-modified natural rubber (NR-MMA graft copolymer).

The rubber-based pressure-sensitive adhesive may have composition obtained by blending the base polymer with another polymer (hereinafter also referred to as auxiliary polymer). Examples of the auxiliary polymer include an acrylic polymer that may serve as a base polymer of an acrylic pressure-sensitive adhesive, a polyester-based polymer that may serve as a base polymer of a polyester-based pressure-sensitive adhesive, a polyurethane-based polymer that may serve as a base polymer of a polyurethane-based pressure-sensitive adhesive, a silicone polymer that may serve as a base polymer of a silicone-based pressure-sensitive adhesive, and polymers other than a base polymer of a rubber-based polymer. The auxiliary polymers may be used alone or in combination thereof.

The usage amount of the auxiliary polymer is preferably 100 parts by weight or less, more preferably 70 parts by weight or less, still more preferably 50 parts by weight or less with respect to 100 parts by weight of the base polymer.

The rubber-based pressure-sensitive adhesive may contain a tackifier. Examples of the kind of the tackifier include those described in the "(Acrylic Pressure-sensitive Adhesive)" section, a petroleum-based resin (e.g., a C5-based or C9-based resin), and a ketone-based resin. The tackifiers may be used alone or in combination thereof.

Examples of the petroleum-based resin include an aliphatic petroleum resin, an aromatic petroleum resin, a copolymer-based petroleum resin, an alicyclic petroleum resin, and hydrogenated products thereof.

An example of the ketone-based resin is a ketone-based resin obtained by condensation of a ketone and formaldehyde.

The tackifier may be suitably used in, for example, an embodiment in which the base polymer is a natural rubber or a modified natural rubber. Preferred examples of the tackifier include a rosin-based resin, a rosin derivative resin, an aliphatic (C5-based) petroleum resin, and a terpene resin.

The usage amount of the tackifier is preferably from 20 parts by weight to 150 parts by weight, more preferably from 30 parts by weight to 100 parts by weight with respect to 100 parts by weight of the base polymer.

The rubber-based pressure-sensitive adhesive may contain a vulcanization accelerator. Examples of such vulcanization accelerator include zinc oxide, dithiocarbamic acids (e.g., sodium dimethyldithiocarbamate, sodium diethyldithiocarbamate, zinc dimethyldithiocarbamate, and zinc diethyldithiocarbamate), thiazoles (e.g., 2-mercaptobenzothiazole and dibenzothiazyl disulfide), guanidines (diphenylguanidine and di-o-tolylguanidine), sulfenamides (e.g., benzothiazyl-2-diethylsulfenamide and N-cyclohexyl-2-benzothiazylsulfenamide), thiurams (e.g., tetramethylthiuram monosulfide and tetramethylthiuram disulfide), xanthogenic acids (e.g., sodium isopropyl xanthate and zinc isopropyl xanthate), aldehyde ammonias (e.g. , acetaldehyde ammonia and hexamethylenetetramine), aldehyde amines (e.g., n-butyl aldehyde aniline and butyl aldehyde monobutyl amine), and thioureas (e.g., diethylthiourea and trimethylthiourea). Such vulcanization accelerators may be used alone or in combination thereof . The usage amount of the vulcanization accelerator is preferably from 0.1 part by weight to 10 parts by weight, more preferably from 0.5 part by weight to 5 parts by weight with respect to 100 parts by weight of the base polymer component.

The rubber-based pressure-sensitive adhesive may contain a cross-linking agent as required. Examples of such cross-linking agent include an isocyanate compound, sulfur, a sulfur-containing compound, a phenol resin, and an organometallic compound. Of those, an isocyanate compound is preferred. Specific examples of the isocyanate compound include those described in the "(Acrylic Pressure-sensitive Adhesive)" section. The usage amount of the isocyanate compound is preferably from 0.3 part by weight to 10 parts by weight, more preferably from 0.5 part by weight to 5 parts by weight with respect to 100 parts by weight of the base polymer component.

Any appropriate additive may be blended into the rubber-based pressure-sensitive adhesive as required. Examples of such additive include a softener, a flame retardant, an antistatic agent, a colorant (e.g., a pigment or a dye), a light stabilizer (e.g., a radical scavenger or a UV absorber), and an antioxidant.

The surface of the first pressure-sensitive adhesive layer may be protected with a release liner until actual use. Examples of a material forming the release liner include any appropriate thin materials, such as: plastic films, such as a polyethylene film, a polypropylene film, a polybutene film, a polybutadiene film, a polymethylpentene film, a polyvinyl chloride film, a vinyl chloride copolymer film, a polyethylene terephthalate film, a polybutylene terephthalate film, a polyurethane film, an ethylene-vinyl acetate copolymer film, and a polyester film; porous materials, such as paper, a fabric, and a non-woven fabric; nets; foam sheets; metallic foils; and laminates thereof. Of those release liners, a plastic film is preferred because of its excellent surface smoothness.

The thickness of the release liner is preferably from 5 $\mu$m to 200 $\mu$m, more preferably from 5 $\mu$m to 100 $\mu$m.

As required, the release liner may be subjected to: release treatment and antifouling treatment with, for example, a silicone-based release agent, a fluorine-based release agent, a long-chain alkyl-based release agent, a fatty acid amide-based release agent, or silica powder; antistatic treatment, such as application-type antistatic treatment, kneading-type antistatic treatment, or vapor deposition-type antistatic treatment; or the like.

<<Second Pressure-sensitive Adhesive Layer>>

The second pressure-sensitive adhesive layer preferably includes a main body layer and a plurality of protruding portions arranged on the surface of the main body layer.

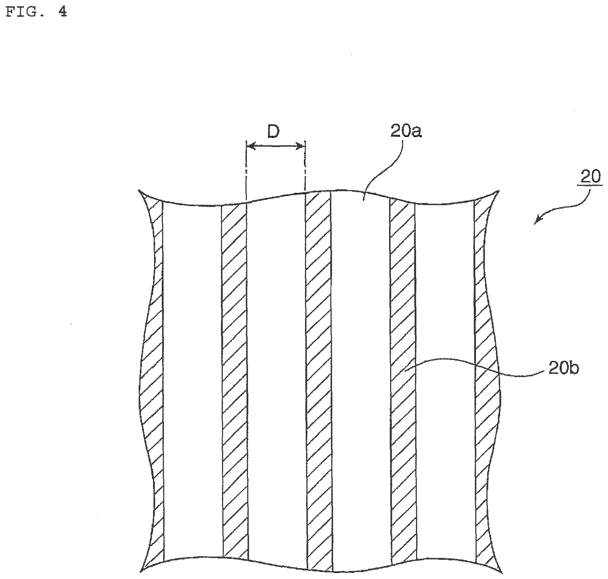

FIG. **4** is one embodiment of a schematic plan view when the second pressure-sensitive adhesive layer is viewed from a vertically upward position opposite to the support. In FIG. **4,** the plurality of protruding portions **20b** are arranged on the surface of the main body layer **20a** of the second pressure-sensitive adhesive layer **20** in a stripe shape. In addition to the stripe shape, any appropriate shape, such as a dot shape, a lattice shape, or a mesh shape, may be adopted as the shape of each of the plurality of protruding portions **20b**. The "lattice shape" and the "mesh shape" differ from each other in the following: while the "lattice shape" is a pattern of the protruding portions in which the plane shapes of hole portions (portions where the protruding portions are not present) are each a square or a rectangle, the "mesh shape" is a pattern of the protruding portions in which the plane shapes of the hole portions (portions where the protruding portions are not present) are each a shape except a square and a rectangle. When the protruding portions are each of a mesh shape, all the shapes of the hole portions (portions where the protruding portions are not present) may be identical to each other, or the shapes may vary from hole portion to hole portion.

When the plurality of protruding portions form a stripe-shaped pattern, the width of each line portion (protruding portion) is preferably from 0.1 mm to 5 mm, more preferably from 0.2 mm to 2 mm. In addition, the width (**D** in FIG. **4**) of a space portion between the adjacent line portions (protruding portions) is preferably from 0.1 mm to 5 mm, more preferably from 0.2 mm to 4.5 mm. The widths of the plurality of line portions (protruding portions) are preferably identical to each other.

When the plurality of protruding portions form a dot-shaped pattern, any appropriate shape, such as a triangle, a quadrangle (e.g. , a square, a rectangle, a rhombus, or a trapezoid), a circular shape (e.g., a perfect circle, a circle close to a perfect circle, or an elliptical shape), an oval, a regular polygon (e.g. , a square), or a star shape, may be adopted as the plane shape of each dot (protruding portion). Any appropriate array form may be adopted as the array form of the dots. Examples of such array form include a square matrix shape and a staggered shape. The plane area of each dot (protruding portion) is preferably from 0.007 $mm^2$ to 20 $mm^2$, more preferably from 0.2 $mm^2$ to 1.8 $mm^2$. With regard to the plane areas of the dots (protruding portions), all the dots (protruding portions) may have the same plane area, or the plane areas may vary from dot (protruding portion) to dot (protruding portion) . A pitch (distance between center points) between the adjacent dots (protruding portions) is preferably from 0.1 mm to 5 mm, more preferably from 0.2 mm to 2 mm.

The plane area, width, and the like of each protruding portion are the area of a portion in the protruding portion having the largest area and the width of a portion in the protruding portion having the largest width, respectively when the second pressure-sensitive adhesive layer is viewed from a vertically upward position opposite to the support. The tip of the protruding portion may be a flat surface, or may be a non-flat surface.

A pressure-sensitive adhesive area ratio in the surface of the main body layer is preferably from 30% to 99%, more preferably from 50% to 98%, still more preferably from 60% to 97%, particularly preferably from 70% to 96%, most preferably from 80% to 95% because the effects of the present invention can be expressed to a larger extent. The "pressure-sensitive adhesive area ratio" as used herein is determined from the following equation.

$$\text{Pressure-sensitive adhesive area ratio (\%)} = (1 - \text{total area of protruding portions/area of entirety of surface of main body layer}) \times 100$$

When the plurality of protruding portions form a stripe-shaped pattern as illustrated in FIG. 4, the "pressure-sensitive adhesive area ratio" is determined from the following equation.

$$\text{Pressure-sensitive adhesive area ratio (\%)} = (1 - \text{line width of protruding portion/(line width of protruding portion+width (pitch) of space portion between adjacent protruding portions)}) \times 100$$

<Main Body Layer>

The pressure-sensitive adhesive forming the first pressure-sensitive adhesive layer described in the section <<First Pressure-sensitive Adhesive Layer>> may be applied as it is to the main body layer.

<Protruding Portions>

The plurality of protruding portions arranged on the surface of the main body layer are arranged for, for example, maintaining a state in which wallpaper or the like is out of contact with the main body layer until the wallpaper or the like is pressurized by a sufficient pressure, and are each formed of a lowly adherent pressure-sensitive adhesive that itself does not express a high pressure-sensitive adhesive strength merely by being brought into contact with the wallpaper or the like. Accordingly, the wallpaper or the like can be moved on the second pressure-sensitive adhesive layer, and hence the position of the wallpaper or the like can be adjusted.

Any appropriate pressure-sensitive adhesive may be adopted as such lowly adherent pressure-sensitive adhesive as described above to the extent that the effects of the present invention are not impaired as long as the pressure-sensitive adhesive is a lowly adherent pressure-sensitive adhesive having the following feature: the protruding portions each formed of the pressure-sensitive adhesive do not immediately deform nor express a high pressure-sensitive adhesive strength merely by being brought into contact with wallpaper or the like. Such pressure-sensitive adhesive is preferably, for example, an aggregate of acrylic copolymer particles from the viewpoint that the low friction properties of the protruding portions to be formed are excellent. The term "aggregate of acrylic copolymer particles" refers to a solidified product in which the acrylic copolymer particles aggregate and solidify, the solidified product being obtained by: applying a "water-dispersed acrylic pressure-sensitive adhesive" to the surface of the main body layer; and heating and drying the pressure-sensitive adhesive.

An emulsion-type tackifier may be addedto the "water-dispersed acrylic pressure-sensitive adhesive" as required. Examples of such tackifier include a terpene-based tackifier, a terpene phenol-based tackifier, a rosin-based tackifier, and a styrene-based tackifier. Of those tackifiers, a rosin-based tackifier is preferred because the effects of the present invention can be expressed to a larger extent.

Any appropriate usage amount may be adopted as the usage amount (solid content) of the tackifier to the extent that the effects of the present invention are not impaired. Such usage amount is preferably from 5 parts by weight to 50 parts by weight with respect to 100 parts by weight of the acrylic copolymer particles. When the water-dispersed acrylic pressure-sensitive adhesive having added thereto the emulsion-type tackifier is used, the aggregate of the acrylic copolymer particles may be an aggregate containing the tackifier (aggregate composition with which the tackifier is compatible).

Examples of a method of applying the "water-dispersed acrylic pressure-sensitive adhesive" to the surface of the main body layer include: a method involving dropping the pressure-sensitive adhesive with a dispenser; a method involving transferring the pressure-sensitive adhesive onto the surface of the main body layer with a gravure roll having engraved therein a pattern to be formed; and general printing methods, such as screen printing, offset printing, and flexographic printing.

In the aggregate of the acrylic copolymer particles forming the protruding portions, the acrylic copolymer particles are each preferably formed of a copolymer containing at least a constituent unit derived from a (meth)acrylic acid alkyl ester as a monomer unit.

The (meth)acrylic acid alkyl ester is preferably a (meth) acrylic acid C1 to C18 alkyl ester including a linear, branched, or cyclic alkyl group having 1 to 18 carbon atoms. Examples of such (meth)acrylic acid C1 to C18 alkyl ester include methyl (meth)acrylate, ethyl (meth)acrylate, propyl (meth)acrylate, isopropyl (meth)acrylate, n-butyl (meth)acrylate, isobutyl (meth)acrylate, s-butyl (meth)acrylate, t-butyl (meth)acrylate, pentyl (meth)acrylate, isopentyl (meth)acrylate, hexyl (meth)acrylate, heptyl (meth)acrylate, octyl (meth)acrylate, cyclohexyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, and tetradecyl (meth)acrylate. Of those (meth)acrylic acid C1 to C18 alkyl esters, (meth)acrylic acid C1 to C12 alkyl esters are preferred, and (meth) acrylic acid C1 to C10 alkyl esters are more preferred. The (meth) acrylic acid alkyl esters may be used alone or in combination thereof.

The acrylic copolymer particles may contain a constituent unit derived from another monomer that is copolymerizable with the (meth)acrylic acid alkyl ester. Examples of such other monomer include: carboxy group-containing monomers, such as acrylic acid, methacrylic acid, carboxyethyl acrylate, carboxypentyl acrylate, itaconic acid, maleic acid, fumaric acid, and crotonic acid; and hydroxy group-containing monomers, such as hydroxyethyl (meth)acrylate, hydroxybutyl (meth)acrylate, hydroxyhexyl (meth)acrylate, hydroxyoctyl (meth)acrylate, hydroxydecyl (meth)acrylate, hydroxylauryl (meth)acrylate, and (4-hydroxymethylcyclohexyl)methyl methacrylate. The carboxy group-containing monomer is preferably acrylic acid or methacrylic acid. The hydroxy group-containing monomer is preferably hydroxyethyl acrylate or hydroxybutyl acrylate . The other monomers may be used alone or in combination thereof.

The acrylic copolymer particles are each preferably formed of a copolymer containing, as monomer units, a constituent unit derived from a (meth)acrylic acid alkyl ester and a constituent unit derived from a carboxy group-containing monomer.

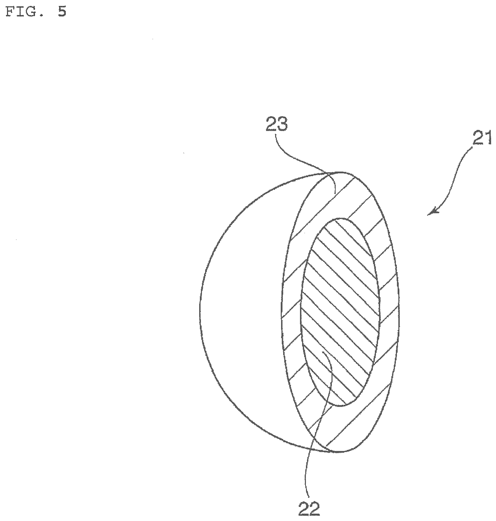

The acrylic copolymer particles are each preferably a core-shell type acrylic copolymer particle **21** having a core **22** and a shell **23** having a modulus of elasticity higher than that of the core **22** as illustrated in FIG. **5.** When the modulus of elasticity of the shell **23** is higher than the modulus of elasticity of the core **22,** the low friction properties of the protruding portions are improved, and hence the frictional force of wallpaper or the like against the pressure-adhesive type pressure-sensitive adhesive tape **100** becomes smaller. Accordingly, the position-adjusting function of the pressure-adhesive type pressure-sensitive adhesive tape **100** is further improved.

The core-shell type acrylic copolymer particle **21** is preferably such that the core **22** includes a polymer (A1) containing a constituent unit derived from an acrylic acid alkyl ester as a main monomer unit, and the shell **23** includes a polymer (A2) containing, as main monomer units, a constituent unit derived from a methacrylic acid alkyl ester and a constituent unit derived from a carboxy group-containing monomer.

The acrylic acid alkyl ester in the polymer (A1) is preferably an acrylic acid C6 to C10 alkyl ester, more preferably 2-ethylhexyl acrylate, isononyl acrylate, or hexyl acrylate. The polymer (A1) may contain a carboxy group-containing monomer as a monomer unit. The carboxy group-containing monomer is preferably acrylic acid or methacrylic acid, more preferably acrylic acid.

The content of the constituent unit derived from the acrylic acid alkyl ester in all monomer units in the polymer (A1) is pref erably from 60 wt% to 100 wt%, more preferably from 70 wt% to 100 wt%, still more preferably from 80 wt% to 100 wt%, particularly preferably from 90 wt% to 100 wt%. Suitable composition of the polymer (A1) is, for example, as follows: acrylic acid alkyl ester (80 wt% to 98 wt%)/carboxy group-containing monomer (2 wt% to 20 wt%).

The methacrylic acid alkyl ester in the polymer (A2) is preferably a methacrylic acid C1 to C18 alkyl ester, more preferably methyl methacrylate, ethyl methacrylate, or cyclohexyl methacrylate . The carboxy group-containing monomer in the polymer (A2) is preferably acrylic acid.

The content of the constituent unit derived from the methacrylic acid alkyl ester in all monomer units in the polymer (A2) is preferably from 60 wt% to 100 wt%, more preferably from 70 wt% to 99.9 wt%, still more preferably from 80 wt% to 99 wt%, particularly preferably from 80 wt% to 98 wt% . Suitable composition of the polymer (A2) is, for example, as follows: methacrylic acid alkyl ester (80 wt% to 99 wt%)/carboxy group-containing monomer (1 wt% to 20 wt%).

The weight ratio (core/shell) of the core **22** to the shell **23** in the core-shell type acrylic copolymer particle **21** is preferably from 10/90 to 90/10, more preferably from 10/90 to 80/20. When the ratio of the core is excessively large (the ratio of the shell is excessively small) in the core/shell ratio, the position-adjusting function of the pressure-adhesive type pressure-sensitive adhesive tape may reduce, and when the ratio of the core is excessively small (the ratio of the shell is excessively large), the pressure-adhesive property of the pressure-adhesive type pressure-sensitive adhesive tape may reduce.

The "water-dispersed acrylic pressure-sensitive adhesive" serving as a source from which the aggregate of the acrylic copolymer particles forming the protruding portions is derived may be preferably obtained by any appropriate emulsion polymerization. Such pressure-sensitive adhesive may be obtained by, for example, appropriately compounding an emulsifier (surfactant), a radical polymerization initiator, and, as required, a chain transfer agent or the like together with the monomers serving as the monomer units forming the acrylic copolymer particles, and subjecting the mixture to emulsion polymerization by any appropriate emulsion polymerization method, such as a collective loading method (collective polymerization method), a monomer dropping method, or a monomer emulsion dropping method. In the monomer dropping method, a continuous dropping method or a divided dropping method may be appropriately selected. The emulsion polymerization methods may be appropriately combined. Any appropriate reaction conditions may be adopted as reaction conditions. Such reaction conditions are as follows: a polymerization temperature is preferably from 40°C to 95°C, and a polymerization time is preferably from 30 minutes to 24 hours.

The water-dispersed acrylic pressure-sensitive adhesive having dispersed therein the core-shell type acrylic copolymer particles may be obtained by, for example, multi-stage emulsion polymerization in which emulsion polymerization for producing the polymer serving as the core of each of the core-shell type acrylic copolymer particles is performed, and emulsion polymerization for producing the polymer serving as the shell of each of the particles is performed in the presence of the produced polymer serving as the core. Any appropriate emulsion polymerization may be adopted as each emulsion polymerization.

The emulsifier is, for example, any appropriate nonreactive surfactant to be typically used in emulsion polymerization. Examples of such nonreactive surfactant include an anionic nonreactive surfactant and a nonionic nonreactive surfactant. Specific examples of the anionic nonreactive surfactant include: higher fatty acid salts, such as sodium oleate; alkyl aryl sulfonates, such as sodium dodecylbenzenesulfonate; alkyl sulfuric acid ester salts, such as sodium lauryl sulfate and ammonium lauryl sulfate; polyoxyethylene alkyl ether sulfuric acid ester salts, such as sodium polyoxyethylene lauryl ether sulfate; polyoxyethylene alkylaryl ether sulfuric acid ester salts, such as sodium polyoxyethylene nonylphenyl ether sulfate; alkyl sulfosuccinic acid ester salts, such as sodium monooctyl sulfosuccinate, sodium dioctyl sulfosuccinate, and sodium polyoxyethylene lauryl sulfosuccinate, and derivatives thereof; and polyoxyethylene distyrenated phenyl ether sulfuric acid ester salts. Specific examples of the nonionic nonreactive surfactant include: polyoxyethylene alkyl ethers, such as polyoxyethylene lauryl ether and polyoxyethylene stearyl ether; polyoxyethylene alkylphenyl ethers, such as polyoxyethylene octylphenyl ether and polyoxyethylene nonylphenyl ether; sorbitan higher fatty acid esters, such as sorbitan monolaurate, sorbitan monostearate, and sorbitan trioleate; polyoxyethylene sorbitan higher fatty acid esters, such as polyoxyethylene sorbitan monolaurate; polyoxyethylene higher fatty acid esters, such as polyoxyethylene monolaurate and polyoxyethylene monostearate; glycerin higher fatty acid esters, such as oleic acid monoglyceride and stearic acid monoglyceride; a polyoxyethylene-polyoxypropylene block copolymer; and polyoxyethylene distyrenated phenyl ether.

In addition to the nonreactive surfactant, for example, a reactive surfactant having an ethylenically unsaturated double bond (radical-polymerizable functional group) may be used as the surfactant. Examples of the reactive surfactant include: an anionic reactive surfactant obtained by introducing a radical-polymerizable functional group, such as a propenyl group or an allyl ether group, into the above-mentioned anionic nonreactive surfactant; and a nonionic reactive surfactant obtained by introducing a radical-polymerizable functional group, such as a propenyl group or an allyl ether group, into the above-mentioned nonionic nonreactive surfactant. A commercial product may be used as the reactive surfactant. Specific examples of the anionic reactive surfactant include: alkyl ether-based surfactants (e.g., AQUALON KH-05, KH-10, and KH-20 manufactured by DKS Co., Ltd., ADEKA REASOAP SR-10N and SR-20N manufactured by ADEKA Corporation, and LATEMUL PD-104 manufactured by Kao Corporation as commercial products); sulfosuccinic acid ester-based surfactants (e.g., LATEMUL S-120, S-120A, S-180P, and S-180A manufactured by Kao Corporation, and ELEMINOL JS-20 manufactured by Sanyo Chemical Industries, Ltd. as commercial products); alkylphenyl ether-based surfactants or alkylphenyl ester-based surf actants (e.g. , AQUALONH-2855A, H-3855B, H-3855C, H-3856, HS-05, HS-10, HS-20, HS-30, HS-1025, BC-05, BC-10, and BC-20 manufactured by DKS Co., Ltd., and ADEKA REASOAP SDX-222, SDX-223, SDX-232, SDX-233, SDX-259, SE-10N, and SE-20N manufactured by ADEKA Corporation as commercial products); (meth)acrylate sulfuric acid ester-based surfactants (e.g. , Antox MS-60 and MS-2N manufactured by Nippon Nyukazai Co., Ltd., and ELEMINOL RS-30 manufactured by Sanyo Chemical Industries, Ltd. as commercial products); and phosphoric acid ester-based surfactants (e.g., H-3330PL manufactured by DKS Co., Ltd., and ADEKA REASOAP PP-70 manufactured by ADEKA Corporation as commercial products). Specific examples of the nonionic reactive surfactant include alkyl ether-based surfactants (e.g., ADEKA REASOAP ER-10, ER-20, ER-30, and ER-40 manufactured by ADEKA Corporation, and LATEMUL PD-420, PD-430, and PD-450 manufactured by Kao Corporation as commercial products); alkylphenyl ether-based surfactants or alkylphenyl ester-based surfactants (e.g., AQUALON RN-10, RN-20, RN-30, and RN-50 manufactured by DKS Co., Ltd., and ADEKA REASOAP NE-10, NE-20, NE-30, and NE-40 manufactured by ADEKA Corporation as commercial products) ; and (meth) acrylate sulfuric acid ester-based surfactants (e.g., RMA-564, RMA-568, and RMA-1114 manufactured by Nippon Nyukazai Co., Ltd. as commercial products).

The emulsifier is preferably a reactive surfactant, more preferably an anionic reactive surfactant.

The emulsifiers may be used alone or in combination thereof.

Any appropriate radical polymerization initiator to be typically used in the emulsion polymerization may be adopted as the radical polymerization initiator that may be used in the emulsion polymerization. Examples of such radical polymerization initiator include: azo-based initiators, such as 2,2'-azobisisobutyronitrile, 2,2'-azobis(2-methylpropionamidine) disulfate, 2,2'-azobis(2-methylpropionamidine) dihydrochloride, 2,2'-azobis(2-amidinopropane) dihydrochloride, and 2,2'-azobis[2-(2-imidazolin-2-yl)propane] dihydrochloride; persulfate-based initiators, such as potassium persulfate and ammonium persulfate; peroxide-based initiators, such as benzoyl peroxide, t-butylhydroperoxide, and hydrogen peroxide; substituted ethane-based initiators, such as phenyl-substituted ethane; and carbonyl-based initiators, such as an aromatic carbonyl compound. Such radical polymerization initiators may be used alone or in combination thereof.

At the time of the performance of the emulsion polymerization, a redox-based initiator using a reducing agent in combination with the radical polymerization initiator may be adopted. The adoption of the redox-based initiator can accelerate the rate of the emulsion polymerization, and can facilitate the performance of the emulsion polymerization at low temperature. Examples of such reducing agent include: reducing organic compounds, such as ascorbic acid, erythorbic acid, tartaric acid, citric acid, glucose, and a metal salt of formaldehyde sulfoxylate or the like; reducing inorganic compounds, such as sodium thiosulfate, sodium sulfite, sodium bisulfite, and sodium metabisulfite; ferrous chloride; rongalite; and thiourea dioxide.

The composition of a monomer emulsion in the emulsion polymerization for obtaining the "water-dispersed acrylic pressure-sensitive adhesive" is preferably composition containing 0.1 part by weight to 10 parts by weight (preferably 1 part by weight to 5 parts by weight) of the surfactant, and 30 parts by weight to 80 parts by weight (preferably 40 parts by weight to 70 parts by weight) of water per 100 parts by weight of the monomers. The amounts of the "surfactant" and "water" as used herein are each the total amount of an amount in the monomer emulsion to be dropped and an amount to be loaded into a polymerization reaction vessel when the emulsion polymerization is performed by a monomer emulsion dropping method.

An additive, such as an epoxy-based cross-linking agent or a silane coupling agent, may be added to the monomer emulsion in the emulsion polymerization for obtaining the "water-dispersed acrylic pressure-sensitive adhesive" to improve the cohesive strength of the acrylic copolymer particles to be produced by the emulsion polymerization.

With regard to the particle diameters of the acrylic copolymer particles, their volume-based median diameter (D50) measured by a laser diffraction-scattering method is preferably 100 nm or more, more preferably 120 nm or more. When the median diameter (D50) of the acrylic copolymer particles is 100 nm or more, both the position-adjusting function and pressure-adhesive property of each of the protruding portions can be satisfactory. From the viewpoint of the cohesiveness of the (meth)acrylic copolymer particles, the median diameter (D50) of the acrylic copolymer particles is preferably 300 nm or less, more preferably 200 nm or less.

The sol weight-average molecular weight (Mw) of the acrylic copolymer particles is preferably more than $1.0 \times 10^4$, more preferably $5.0 \times 10^4$ or more. The sol weight-average molecular weight (Mw) of the acrylic copolymer particles is preferably $1.0 \times 10^7$ or less, more preferably $5.0 \times 10^6$ or less. When the sol weight-average molecular weight (Mw) of the acrylic copolymer particles is $1.0 \times 10^4$ or less, it may be difficult to form protruding portions each having a sufficient modulus of elasticity. When the sol weight-average molecular weight (Mw) of the acrylic copolymer particles is more than $1.0 \times 10^7$, the moduli of elasticity of the protruding portions tobe formedmaybe excessively high, and hence theprotrudingportions may hardly deform at the time of their pressurization. Accordingly, a sufficient adhesive property may be hardly obtained.

The sol weight-average molecular weight (Mw) of the acrylic copolymer particles refers to the weight-average molecular weight (Mw) of sol portions in the acrylic copolymer particles, and the weight-average molecular weight is determined from the matter of the acrylic copolymer particles soluble in ethyl acetate by a gel permeation chromatography (GPC) method in terms of polystyrene. Specifically, the weight-average molecular weight is measured by using 2 columns "TSK gel GMH-H(20)" manufactured by Tosoh Corporation connected to "HPLC8020" manufactured by Tosoh Corporation in a tetrahydrofuran solvent under the condition of a flow rate of 0.5 ml/min.

The protrusion height of each of the protruding portions from the surface of the main body layer is preferably from 1 μm to 200 μm, more preferably from 10 μm to 100 μm, still more preferably from 20 μm to 80 μm because the effects of the present invention can be expressed to a larger extent.

<Release Liner>

The surface of the second pressure-sensitive adhesive layer **20** is preferably protected with the release liner **40** as illustrated in FIG. **2** until the pressure-adhesive type pressure-sensitive adhesive tape of the present invention is used. The release liner **40** is preferably peeled when the bonding work of wallpaper or the like is performed with the pressure-adhesive type pressure-sensitive adhesive tape of the present invention.

The compressive modulus of elasticity of the release liner is preferably 1 MPa or less, more preferably 0.7 MPa or less, still more preferably 0.5 MPa or less. When the compressive modulus of elasticity of the release liner is 1 MPa or less, the release liner can have a cushioning property. Accordingly, even when the pressure-adhesive type pressure-sensitive adhesive tape of the present invention is wound into a roll as illustrated in FIG. **2,** the roll is stored, and a pressure is applied to the roll owing to its tight winding, stress concentration on the protruding portions is alleviated, and hence the following troubles can be prevented: the protruding portions collapse; or the protruding portions are embedded in the main body layer, and hence the protrusion heights of the protruding portions remarkably reduce.

The material and form of the release liner are preferably a material and a form each having such compressive modulus of elasticity as described above, and are, for example, as follows: at least one surface of a film mainly formed of a porous film is subjected to release treatment. The term "film mainly formed of a porous film" as used herein means the porous film alone, or a laminated film of the porous film and any other film (layer).

Examples of the porous film include:

(1) paper, a woven fabric, and a non-woven fabric (e.g., a polyester (such as polyethylene terephthalate (PET)) non-woven fabric);
(2) films each obtained by subjecting a solid film containing at least one kind of resin selected from polyester (e.g. , polyethylene terephthalate (PET)), nylon, Saran (product name), polyvinyl chloride, polyethylene, polypropylene, an ethylene-vinyl acetate copolymer, polytetrafluoroethylene, and an ionomer as a component to mechanical boring treatment;
(3) foam films of polyolefin foams (e.g., a non-cross-linked polyethylene foam, a cross-linked polyethylene foam, a polypropylene foam, a foam containing polyethylene (PE) as a component, a foam containing polypropylene (PP) as a component, and a foam containing polyethylene (PE) and polypropylene (PP) as components), polyester foams (e.g., a polyethylene terephthalate foam), urethane foams (e.g., a soft urethane foam, a hard urethane foam, a urethane-modified polyisocyanurate foam, and a polyisocyanurate foam), and rubber-based foams.

Of those, a foam film is preferred, and a polyolefin foam film is more preferred from the viewpoint that a sufficient cushioning property is easily obtained.

The apparent density of the porous film measured in conformity with JIS-K-7222 (2005) is preferably 500 kg/m$^3$ or less, more preferably 200 kg/m$^3$ or less. When the porous film has such apparent density, a release liner having a compressive modulus of elasticity of 1 MPa or less is easily obtained.

The thickness of the porous film is preferably 100 $\mu$m or more, more preferably 500 $\mu$m or more from the viewpoint that stress to be applied to the protruding portions is dispersed to the extent possible. The thickness of the porous film is preferably 2,000 $\mu$m or less, more preferably 1,500 $\mu$m or less from the viewpoint of a thickness when the pressure-adhesive type pressure-sensitive adhesive tape of the present invention is wound in a roll shape (i.e., the viewpoint of increasing the winding amount of the pressure-adhesive type pressure-sensitive adhesive tape of the present invention).

When the porous film is a foam film, a foam film in which fine pores have an average long diameter in the range of from 10 $\mu$m to 1,000 $\mu$m, and an average short diameter in the range of from 10 $\mu$m to 1,000 $\mu$m is preferred. The opening ratio of the foam film is preferably from 50% to 99%, more preferably from 60% to 98% from the viewpoint of its flexibility. The term "opening ratio" as used herein means the ratio of the area of the fine pores to the area of the foam film in a plane perpendicular to the thickness direction of the film.

The other film (layer) is, for example, a metal- or resin-made solid film, or a skin layer. The term "metal- or resin-made solid film" means a metal- or resin-made pore less film that is not subjected to any mechanical boring treatment. Even when fine pores inevitably occurring at the production stage at which a metal or a resin is turned into a film are present in the film, such metal- or resin-made film is included in the "solid film".

Examples of the resin-made solid film include films each formed of at least one kind of resin selected from: polyester (e.g., polyethylene terephthalate (PET)) nylon; polyvinyl chloride; polyvinylidene chloride; polyolefins, such as polyethylene (e.g., high-density polyethylene), polypropylene, Reactor TPO, and an ethylene-vinyl acetate copolymer; polytetrafluoroethylene; and an ionomer resin. Of those resin-made solid films, a high-density polyethylene film is preferred.

Examples of the metal-made solid film include an aluminum foil, a copper foil, and a stainless-steel foil.

The thickness of the metal- or resin-made solid film is preferably from 3 $\mu$m to 80 $\mu$m, more preferably from 3 $\mu$m to 20 $\mu$m from the viewpoints of the maintenance of the cushioning property of the porous film and stable formation of a release layer.

The term "skin layer" refers to a porous thin layer formed on the surface of the porous film (foam film), the thin layer having an opening ratio smaller than the opening ratio of the porous film (foam film) . The term "opening ratio" refers to the ratio of the area of fine pores to the area of the thin layer in the plane perpendicular to the thickness direction of the porous film. The opening ratio of the skin layer is preferably 10% or less, more preferably 5% or less from the viewpoints of the maintenance of the cushioning property of the porous film (foam film) and stable formation of the release layer. The thickness of the skin layer is preferably from 3 μm to 50 μm, more preferably from 3 μm to 20 μm from the viewpoints of the maintenance of the cushioning property of the porous film (foam film) and stable formation of the release layer.

The skin layer may be preferably formed by melting the surface layer portion of the porous film (foam film). For example, when a heating roll set at a temperature lower than the melting point of the film by from about 5°C to about 20°C is used, and the rotational speed of the heating roll is made lower than the traveling speed of the film, the skin layer may be formed on the side of the surface of the film in contact with the heating roll.

A release agent that may be used in the release treatment is, for example, a fluorine-based release agent, a long-chain alkyl acrylate-based release agent, or a silicone-based release agent. The release agent that may be used in the release treatment is preferably a silicone-based release agent.

The silicone-based release agent is preferably a cationically polymerizable and UV-curable silicone-based release agent. A curing method such as UV irradiation or electron beam irradiation may be adopted as a curing method. The cationically polymerizable and UV-curable silicone-based release agent is preferably a mixture containing cationically polymerizable silicone (polyorganosiloxane having an epoxy functional group in a molecule thereof) and an onium salt-based photoinitiator, more preferably a mixture in which the onium salt-based photoinitiator is formed of a boron-based photoinitiator. Particularly satisfactory peelability (releasability) can be obtained by adopting such cationically polymerizable and UV-curable silicone-based release agent in which the onium salt-based photoinitiator is formed of a boron-based photoinitiator. The cationically polymerizable silicone (polyorganosiloxane having an epoxy functional group in a molecule thereof) has at least 2 epoxy functional groups in one molecule thereof, and may be linear silicone, branched silicone, or a mixture thereof. Any appropriate epoxy functional group may be adopted as the kind of the epoxy functional group to be incorporated into the polyorganosiloxane. Such epoxy functional group is, for example, such a functional group that ring-opening cationic polymerization is advanced by the onium salt-based photoinitiator, and specific examples thereof include a γ-glycidyloxypropyl group, a β-(3,4-epoxycyclohexyl)ethyl group, and a β-(4-methyl-3,4-epoxycyclohexyl)propyl group. Such cationically polymerizable silicone (polyorganosiloxane having an epoxy functional group in a molecule thereof) is commercially available, and a commercial product may be used. Examples of such commercial product include UV9315, UV9430, UV9300, TPR6500, and TPR6501 manufactured by Toshiba Silicone Co., Ltd., X-62-7622, X-62-7629, X-62-7655, X-62-7660, and X-62-7634A manufactured by Shin-Etsu Chemical Co., Ltd., and Poly200, Poly201, RCA200, RCA250, and RCA251 manufactured by Arakawa Chemical Industries, Ltd.

A thermosetting addition-type silicone-based release agent (thermosetting addition-type polysiloxane-based release agent) may be used as the silicone-based release agent. The thermosetting addition-type silicone-based release agent contains, as essential constituent components, polyorganosiloxane containing an alkenyl group as a functional group in a molecule thereof (alkenyl group-containing silicone) and polyorganosiloxane containing a hydrosilyl group as a functional group in a molecule thereof. The polyorganosiloxane containing an alkenyl group as a functional group in a molecule thereof is preferably polyorganosiloxane having 2 or more alkenyl groups in a molecule thereof . Examples of the alkenyl group include a vinyl group (an ethenyl group), an allyl group (a 2-propenyl group), a butenyl group, a pentenyl group, and a hexenyl group. The alkenyl group is preferably bonded to a silicon atom of polyorganosiloxane forming a main chain or a skeleton (e.g., a silicon atom at an end or a silicon atom in a main chain) . Examples of the polyorganosiloxane forming a main chain or a skeleton include : polyalkylalkylsiloxanes (polydialkylsiloxanes), such as polydimethylsiloxane, polydiethylsiloxane, and polymethylethylsiloxane; polyalkylarylsiloxanes; and copolymers in which a plurality of kinds of silicon atom-containing monomer components are used (e.g., poly(dimethylsiloxane-diethylsiloxane). Of those polyorganosiloxanes, polydimethylsiloxane is preferred. That is, as the polyorganosiloxane containing an alkenyl group as a functional group in a molecule thereof, specifically, polydimethylsiloxane having a vinyl group, a hexenyl group, or the like as a functional group is preferred.

The polyorganosiloxane containing a hydrosilyl group as a functional group in a molecule thereof is polyorganosiloxane having a hydrogen atom bonded to a silicon atom (in particular, a silicon atom having a Si-H bond) in a molecule thereof, and is preferably polyorganosiloxane having 2 or more silicon atoms each having a Si-H bond in a molecule thereof. A silicon atom having a Si-H bond may be any one of a silicon atom in the main chain of the polyorganosiloxane and a silicon atom in a side chain thereof, and may be incorporated as a constituent unit of the main chain, or may be incorporated as a constituent unit of the side chain. The number of silicon atoms each having a Si-H bond is preferably 2 or more. Specific examples of the polyorganosiloxane containing a hydrosilyl group as a functional group in a molecule thereof include polymethylhydrogensiloxane and poly(dimethylsiloxane-methylhydrogensiloxane).

A reaction inhibitor (reaction retarder) may be used in a thermosetting silicone-based release treatment agent for imparting storage stability at room temperature together with a thermosetting silicone-based resin. For example, when a thermosetting addition-type silicone-based release agent is used as a release agent, specific examples of such reaction inhibitor include 3,5-dimethyl-1-hexyn-3-ol, 3-methyl-1-penten-3-ol, 3-methyl-3-pent-1-yne, and 3,5-dimethyl-3-hex-1-yne.

Any other component, such as a release control agent, may be used in the thermosetting silicone-based release treatment agent as required. Specific examples of such other component include: a release control agent, such as an MQ resin; and polyorganosiloxane free of an alkenyl group or a hydrosilyl group (e.g., polydimethylsiloxane end-blocked with trimethylsiloxy groups). The content of such other component in the release treatment agent is preferably, for example, from 1 wt% to 30 wt% with respect to the entirety of the solid content of the release treatment agent.

The thermosetting silicone-based release treatment agent preferably contains a curing catalyst. Any appropriate curing catalyst may be adopted as the curing catalyst. Such curing catalyst is preferably a platinum-based catalyst to be used as a catalyst for thermosetting addition-type silicone. The platinum-based catalyst is preferably, for example, at least one platinum-based catalyst selected from chloroplatinic acid, an olefin complex of platinum, and an olefin complex of chloroplatinic acid. The curing catalyst may be used as it is, or in the form of being dissolved or dispersed in a solvent. The compounding amount (solid content) of the curing catalyst is preferably from 0.05 part by weight to 0.55 part by weight, more preferably from 0.06 part by weight to 0.50 part by weight with respect to 100 parts by weight (resin content) of the thermosetting silicone-based resin. When the compounding amount of the curing catalyst is less than 0.05 part by weight with respect to 100 parts by weight (resin content) of the thermosetting silicone-based resin, the curing rate of the release treatment agent may be slower. When the compounding amount of the curing catalyst is more than 0.55 part by weight with respect to 100 parts by weight (resin content) of the thermosetting silicone-based resin, the pot life of the release treatment agent may be remarkably short.

An organic solvent is typically used in an application liquid containing the release treatment agent to be used at the time of the arrangement of the release layer for improving its applicability. Examples of the organic solvent include: aliphatic or alicyclic hydrocarbon-based solvents, such as cyclohexane, hexane, and heptane; aromatic hydrocarbon-based solvents, such as toluene and xylene; ester-based solvents, such as ethyl acetate and methyl acetate; ketone-based solvents, such as acetone and methyl ethyl ketone; and alcohol-based solvents, such as methanol, ethanol, and butanol. Those organic solvents may be used alone or in combination thereof.

The thickness of the release layer is preferably from 0.001 $\mu$m to 10 $\mu$m, more preferably from 0.03 $\mu$m to 5 $\mu$m, still more preferably from 0.1 $\mu$m to 1 $\mu$m from the viewpoints of excellent peelability (releasability) and the suppression of thickness unevenness (stable formation of the release layer).

Examples

Now, the present invention is described specifically by way of Examples. However, the present invention is by no means limited to these Examples. Test and evaluation methods in Examples and the like are as described below. The term "part (s) " in the following description means "part(s) by weight" unless otherwise specified, and the term "%" in the following description means "wt%" unless otherwise specified.

<180° Peeling Pressure-sensitive Adhesive Strength A1>

Polyvinyl chloride wallpaper (manufactured by Sangetsu Corporation, product number: SP-9919) was bonded to a PP plate (thickness: 2 mm) with a double-sided tape (manufactured by Nitto Denko Corporation, product number: No. 5000NS) so that a picture surface became a front surface. Thus, an adherend (1) was obtained.

A release liner on the secondpressure-sensitive adhesive layer side of a pressure-adhesive type pressure-sensitive adhesive tape was peeled, and the exposed second pressure-sensitive adhesive layer was bonded to a polyethylene terephthalate (PET) film having a thickness of 25 $\mu$m (product name: "LUMIRROR S10", manufactured by Toray Industries, Inc.). Thus, a test piece was obtained. The resultant test piece was cut into a width of 20 mm, and the other release liner was peeled. A2-kilogram roller was reciprocated once to crimp and bond the exposed first pressure-sensitive adhesive layer to the front surface of the polyvinyl chloride wallpaper of the adherend (1). Immediately after that, a 180° peeling pressure-sensitive adhesive strength A1 was measured by peeling the pressure-adhesive type pressure-sensitive adhesive tape from the front surface of the polyvinyl chloride wallpaper with a tensile compression tester (apparatus name: "TG-1kN", manufactured by Minebea Co., Ltd.) at a temperature of 23°C, a humidity of 50%RH, and a tensile rate of 300 mm/min.

<180° Peeling Pressure-sensitive Adhesive Strength A2>

Polyvinyl chloride wallpaper (manufacturedbyRunonCo. , Ltd. , product number: RH-9392) was bonded to a PP plate (thickness: 2 mm) with a double-sided tape (manufactured by Nitto Denko Corporation, product number: No. 5000NS) so that a plain surface became a front surface. Thus, an adherend (2) was obtained.

A release liner on the first pressure-sensitive adhesive layer side of a pressure-adhesive type pressure-sensitive adhesive tape was peeled, and the exposed first pressure-sensitive adhesive layer was bonded to a polyethylene terephthalate (PET) film having a thickness of 25 $\mu$m (product name: "LUMIRROR S10", manufactured by Toray Industries, Inc.). Thus, a test piece was obtained. The resultant test piece was cut into a width of 20 mm, and the other release liner was peeled. A 0.5-kilogram roller was reciprocated once to crimp and bond the exposed secondpressure-sensitive adhesive layer to the rear surface of the polyvinyl chloride wallpaper of the adherend (2). Immediately after that, a 180° peeling pressure-sensitive adhesive strength A2 was measured by peeling the pressure-adhesive type pressure-sensitive adhesive tape from the rear surface of the polyvinyl chloride wallpaper with a tensile compression tester (apparatus name: "TG-1kN", manufactured by Minebea Co., Ltd.) at a temperature of 23°C, a humidity of 50%RH, and a tensile rate of 300 mm/min.

<180° Peeling Pressure-sensitive Adhesive Strength B1>

Polyvinyl chloride wallpaper (manufactured by Sangetsu Corporation, product number: SP-9919) was bonded to a PP plate (thickness: 2 mm) with a double-sided tape (manufactured by Nitto Denko Corporation, product number: No. 5000NS) so that a picture surface became a front surface. Thus, an adherend (1) was obtained.
A release liner on the secondpressure-sensitive adhesive layer side of a pressure-adhesive type pressure-sensitive adhesive tape was peeled, and the exposed secondpressure-sensitive adhesive layer was bonded to a polyethylene terephthalate (PET) film having a thickness of 25 $\mu$m (product name: "LUMIRROR S10", manufactured by Toray Industries, Inc.). Thus, a test piece was obtained. The resultant test piece was cut into a width of 20 mm, and the other release liner was peeled. A 2-kilogram roller was reciprocated once to crimp and bond the exposed first pressure-sensitive adhesive layer to the front surface of the polyvinyl chloride wallpaper of the adherend (1). The resultant was stored at a temperature of 60°C for 1 week. After that, a 180° peeling pressure-sensitive adhesive strength B1 was measured by peeling the pressure-adhesive type pressure-sensitive adhesive tape from the front surface of the polyvinyl chloride wallpaper with a tensile compression tester (apparatus name: "TG-1kN", manufactured by Minebea Co., Ltd.) at a temperature of 23°C, a humidity of 50%RH, and a tensile rate of 300 mm/min.

<180° Peeling Pressure-sensitive Adhesive Strength B2>

Polyvinyl chloride wallpaper (manufactured by Runon Co., Ltd. , product number: RH-9392) was bonded to a PP plate (thickness: 2 mm) with a double-sided tape (manufactured by Nitto Denko Corporation, product number: No. 5000NS) so that a plain surface became a front surface. Thus, an adherend (2) was obtained.
A release liner on the first pressure-sensitive adhesive layer side of a pressure-adhesive type pressure-sensitive adhesive tape was peeled, and the exposed first pressure-sensitive adhesive layer was bonded to a polyethylene terephthalate (PET) film having a thickness of 25 $\mu$m (product name: "LUMIRROR S10", manufactured by Toray Industries, Inc.). Thus, a test piece was obtained. The resultant test piece was cut into a width of 20 mm, and the other release liner was peeled. A 2-kilogram roller was reciprocated once to crimp and bond the exposed second pressure-sensitive adhesive layer to the rear surface of the polyvinyl chloride wallpaper of the adherend (2). The resultant was stored at a temperature of 60°C for 1 week. After that, a 180° peeling pressure-sensitive adhesive strength B2 was measured by peeling the pressure-adhesive type pressure-sensitive adhesive tape from the rear surface of the polyvinyl chloride wallpaper with a tensile compression tester (apparatus name: "TG-1kN", manufactured by Minebea Co., Ltd.) at a temperature of 23°C, a humidity of 50%RH, and a tensile rate of 300 mm/min.

[Example 1]

(Monomer Emulsion A)

A mixture of 100 parts of 2-ethylhexyl acrylate (2-EHA), 1.5 parts of AQUALON HS-1025 serving as a reactive surfactant (manufactured by DKS Co., Ltd.), and 82 parts of ion-exchanged water was produced as a raw material in a vessel, and was stirred with a homomixer under a nitrogen atmosphere for 5 minutes at 6,000 rpm to prepare a monomer emulsion A.

(Monomer Emulsion B)

A mixture of 80 parts of methyl methacrylate (MMA), 10 parts of butyl acrylate (BA), 5 parts of acrylic acid (AA), 5 parts of methacrylic acid (MAA), 1.5 parts of AQUALON HS-1025 serving as a reactive surfactant (manufactured by DKS Co., Ltd.), and 82 parts of ion-exchanged water was produced as a raw material in a vessel, and was stirred with a homomixer under a nitrogen atmosphere for 5 minutes at 6,000 rpm to prepare a monomer emulsion B.

(Water-dispersed Acrylic Pressure-sensitive Adhesive)

0.5 Part of AQUALON HS-1025 serving as a reactive surfactant (manufactured by DKS Co., Ltd.) and 76.8 parts of ion-exchanged water were loaded into a reaction vessel including a cooling tube, a nitrogen inlet tube, a thermometer, a dropping facility, and a stirring blade, and the vessel was sufficiently purged with nitrogen while the mixture was stirred. After that, the temperature of the reaction liquid was increased to 60°C. It was confirmed that the temperature was kept constant at 60°C, and then 0.05 part of VA-57 serving as a water-soluble azo polymerization initiator (manufactured by Wako Pure Chemical Industries, Ltd.) was added to the liquid. 10 Minutes after that, 150.6 parts of the monomer emulsion (A) was dropped to the mixture over 2.5 hours to provide a copolymer serving as a core layer. Next, 0.05 part of VA-57 was further added to the resultant. 10 Minutes after that, 37.6 parts of the monomer emulsion (B) was dropped to the mixture over 45 minutes to form a copolymer serving as a shell layer. Thus, a water-dispersed acrylic pressure-sensitive adhesive containing core-shell type acrylic copolymer particles as a dispersoid was produced. The sol weight-average molecular weight of the core-shell type acrylic copolymer particles was 200,000. The volume-based median diameter (D50) of the core-shell type acrylic copolymer particles measured by a laser diffraction-scattering method was 160 nm. 0.18 Part by weight of ammonia water having a concentration of 10% and 10 parts (solid content) of a polymerized rosin ester-based tackifier ("SUPER ESTER E-865-NT" manufactured by Arakawa Chemical Industries, Ltd.) were added per 100 parts of the core-shell type acrylic copolymer particles (solid content) of the water-dispersed acrylic pressure-sensitive adhesive thus obtained. Thus, a water-dispersed acrylic pressure-sensitive adhesive (1) serving as a final product was obtained.

(Production of Pressure-adhesive Type Pressure-sensitive Adhesive Tape)

The water-dispersed acrylic pressure-sensitive adhesive (1) (having a core/shell ratio of 80:20) was applied to the pressure-sensitive adhesive surface of a rubber-based double-sided pressure-sensitive adhesive tape (No. 513 (manufactured by Nitto Denko Corporation)) with an applying machine to form stripe-shaped protruding portions. The pressure-sensitive adhesive was applied so that a pressure-sensitive adhesive area ratio became 90% (line width of each of the protruding portions: 0.5 mm, pitch between lines: 4.50 mm), and the target height of each of the protruding portions became 25 μm. The conveying speed of the tape at the time of the application was set to 10 m/min, and the pressure-sensitive adhesive was dried at 110°C for about 1 minute. In order to protect the protruding portions, the tape was bonded to a release liner having a cushioning property. The resultant was wound to provide a pressure-adhesive type pressure-sensitive adhesive tape (1).
The pressure-sensitive adhesive area ratio was determined from the following equation.

$$\text{Pressure-sensitive adhesive area ratio (\%)} = (1 - \text{line width of protruding portion} / (\text{line width of protruding portion} + \text{pitch between adjacent protruding portions})) \times 100$$

The result is shown in Table 1.

[Comparative Example 1]

A pressure-adhesive type pressure-sensitive adhesive tape (C1) was obtained in the same manner as in Example 1 except that in the formation of the protruding portions, the pressure-sensitive adhesive was applied so that the pressure-sensitive adhesive area ratio became 66% (line width of each of the protruding portions: 0.5 mm, pitch between lines: 1 mm), and the target height of each of the protruding portions became 25 μm.
The result is shown in Table 1.

Table 1

| | 180° Peeling pressure-sensitive adhesive strength of first pressure-sensitive adhesive layer (N/20 mm) | | 180° Peeling pressure-sensitive adhesive strength of second pressure-sensitive adhesive layer (N/20 mm) | | Pressure-sensitive adhesive area ratio (%) |
|---|---|---|---|---|---|
| | Immediately after bonding | After storage at 60°C×7 days | Immediately after bonding | After storage at 60°C×7 days | |
| Example 1 | 2.0 | 2.7 | 3.6 | 7.6 | 90 |
| Comparative Example 1 | 2.2 | 3.0 | 0.0 | 1.6 | 66 |

As shown in Table 1, in Example 1, the following facts are found: the first pressure-sensitive adhesive layer expresses its pressure-sensitive adhesive strength immediately after the bonding to such an extent that the wallpaper does not fall; and even after the storage at 60°C×7 days, no remarkable increase in pressure-sensitive adhesive strength is observed, and hence the ground wallpaper is not damaged at the time of the re-peeling of the layer. In addition, in Example 1, the following facts are found: the second pressure-sensitive adhesive layer expresses its pressure-sensitive adhesive strength immediately after the bonding to such an extent that the wallpaper does not fall; and after the storage at 60°C×7 days, the pressure-sensitive adhesive strength increases, and hence the layer peels from the ground at the time of its re-peeling under a state of being caused to adhere to the wallpaper.

Meanwhile, as shown in Table 1, in Comparative Example 1, it is found that the adhesive strength of the second pressure-sensitive adhesive layer is so low immediately after the bonding that the wallpaper falls (the temporary fixing property of the layer is low) .

Industrial Applicability

The pressure-adhesive type pressure-sensitive adhesive tape of the present invention can be suitably utilized in, for example, the bonding work of wallpaper or the like.

Reference Signs List

10      first pressure-sensitive adhesive layer
20      second pressure-sensitive adhesive layer
20a     main body layer
20b     protruding portion
21      core-shell type acrylic copolymer particle
22      core
23      shell
30      support
40      release liner
50      wall
50A     surface of wall
60      wallpaper
100     pressure-adhesive type pressure-sensitive adhesive tape

**Claims**

1.  A pressure-adhesive type pressure-sensitive adhesive tape, comprising:

    a support;
    a first pressure-sensitive adhesive layer arranged on one side of the support; and
    a second pressure-sensitive adhesive layer arranged on another side of the support,
    wherein, when a 180° peeling pressure-sensitive adhesive strength measured by peeling, immediately after a 2-kilogram roller has been reciprocated once to crimp and bond the first pressure-sensitive adhesive layer of the pressure-adhesive type pressure-sensitive adhesive tape having a width of 20 mm to a front surface of polyvinyl chloride wallpaper, the pressure-adhesive type pressure-sensitive adhesive tape from the front surface of the polyvinyl chloride wallpaper with a tensile compression tester at a temperature of 23°C, a humidity of 50%RH, and a tensile rate of 300 mm/min is represented by A1,

a 180° peeling pressure-sensitive adhesive strength measured by peeling, immediately after a 0.5-kilogram roller has been reciprocated once to crimp and bond the second pressure-sensitive adhesive layer of the pressure-adhesive type pressure-sensitive adhesive tape having a width of 20 mm to a rear surface of the polyvinyl chloride wallpaper, the pressure-adhesive type pressure-sensitive adhesive tape from the rear surface of the polyvinyl chloride wallpaper with a tensile compression tester at a temperature of 23°C, a humidity of 50%RH, and a tensile rate of 300 mm/min is represented by A2,

a 180° peeling pressure-sensitive adhesive strength measured by peeling, after a 2-kilogram roller has been reciprocated once to crimp and bond the first pressure-sensitive adhesive layer of the pressure-adhesive type pressure-sensitive adhesive tape having a width of 20 mm to the front surface of the polyvinyl chloride wallpaper, and the resultant has been stored at a temperature of 60°C for 1 week, the pressure-adhesive type pressure-sensitive adhesive tape from the front surface of the polyvinyl chloride wallpaper with a tensile compression tester at a temperature of 23°C, a humidity of 50%RH, and a tensile rate of 300 mm/min is represented by B1, and

a 180° peeling pressure-sensitive adhesive strength measured by peeling, after a 2-kilogram roller has been reciprocated once to crimp and bond the second pressure-sensitive adhesive layer of the pressure-adhesive type pressure-sensitive adhesive tape having a width of 20 mm to the rear surface of the polyvinyl chloride wallpaper, and the resultant has been stored at a temperature of 60°C for 1 week, the pressure-adhesive type pressure-sensitive adhesive tape from the rear surface of the polyvinyl chloride wallpaper with a tensile compression tester at a temperature of 23°C, a humidity of 50%RH, and a tensile rate of 300 mm/min is represented by B2,

the A1 and the A2 satisfy a relationship of A1<A2, and the B1 and the B2 satisfy a relationship of B1<B2.

2. The pressure-adhesive type pressure-sensitive adhesive tape according to claim 1, wherein the B1 is 1 N/20 mm or more.

3. The pressure-adhesive type pressure-sensitive adhesive tape according to claim 1 or 2, wherein the B2 is 1 N/20 mm or more.

4. The pressure-adhesive type pressure-sensitive adhesive tape according to any one of claims 1 to 3, wherein the A1 is 1 N/20 mm or more.

5. The pressure-adhesive type pressure-sensitive adhesive tape according to any one of claims 1 to 4, wherein the A2 is 1 N/20 mm or more.

6. The pressure-adhesive type pressure-sensitive adhesive tape according to any one of claims 1 to 5, wherein the B1 is 4 N/20 mm or less.

7. The pressure-adhesive type pressure-sensitive adhesive tape according to any one of claims 1 to 6, wherein the A2 is 5 N/20 mm or less.

FIG. 1

FIG. 2

FIGS. 3

(A)

(B)

(C)

29

FIG. 4

FIG. 5

# EP 3 584 295 A1

<table>
<tr><td colspan="2" align="center"><strong>INTERNATIONAL SEARCH REPORT</strong></td><td>International application No.<br>PCT/JP2017/046895</td></tr>
</table>

**A. CLASSIFICATION OF SUBJECT MATTER**
Int.Cl. C09J7/20(2018.01)i, C09J201/00(2006.01)i

According to International Patent Classification (IPC) or to both national classification and IPC

**B. FIELDS SEARCHED**

Minimum documentation searched (classification system followed by classification symbols)
Int.Cl. C09J1/00-201/10

Documentation searched other than minimum documentation to the extent that such documents are included in the fields searched
Published examined utility model applications of Japan       1922-1996
Published unexamined utility model applications of Japan     1971-2018
Registered utility model specifications of Japan             1996-2018
Published registered utility model applications of Japan     1994-2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2015-984 A (NITTO DENKO CORPORATION) 05 January 2015, claims, examples<br>& US 2014/0370221 A1, claims, examples & EP 2816091 A1 & CN 104231967 A | 1-7 |
| X | JP 2016-164262 A (NITTO DENKO CORPORATION) 08 September 2016, claims, examples<br>& US 2017/0226384 A1, claims, examples & WO 2016/136717 A1 | 1-7 |

☒ Further documents are listed in the continuation of Box C.       ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>08.02.2018 | Date of mailing of the international search report<br>20.02.2018 |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

32

**INTERNATIONAL SEARCH REPORT**

| International application No. |
| --- |
| PCT/JP2017/046895 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X | JP 9-227843 A (SEKISUI CHEMICAL CO., LTD.) 02 September 1997, claims, examples<br>(Family: none) | 1-7 |

Form PCT/ISA/210 (continuation of second sheet) (January 2015)

**EP 3 584 295 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2657965 B

- JP 3660740 B